# EUROPÄISCHE PATENTSCHRIFT

(11) **EP 3 560 098 B1**
(45) Veröffentlichungstag und Bekanntmachung des Hinweises auf die Patenterteilung: **22.07.2020**
(21) Anmeldenummer: 17822277.4
(22) Anmeldetag: 20.12.2017
(51) Int. Cl.: H02S 20/10

(54) **PHOTOVOLTAIK-ANLAGE UND ZUGEHÖRIGE VERWENDUNG**
PHOTOVOLTAIC SYSTEM AND ASSOCIATED USE
INSTALLATION PHOTOVOLTAÏQUE ET UTILISATION ASSOCIÉE

(30) Priorität: 23.12.2016 DE 102016015436
(43) Veröffentlichungstag der Anmeldung: 30.10.2019
(60) Teilanmeldung: 20157472.0
(73) Patentinhaber: Next2Sun GmbH, 66663 Merzig (DE)
(72) Erfinder: HILDEBRANDT, Heiko, 79110 Freiburg (DE); PROBST, Markus, 66780 Rehlingen-Siersburg (DE); BRILL, Thomas, 66701 Beckingen-Reimsbach (DE); ZWOSTA, Nicolai, 10555 Berlin (DE); BALDY, Robert, 10555 Berlin (DE)
(74) Vertreter: Mertzlufft-Paufler, Cornelius
(86) Internationale Anmeldenummer: PCT/EP2017/083813
(87) Internationale Veröffentlichungsnummer: WO 2018/115120

(56) Entgegenhaltungen:
- WO-A2-2015/106170
- DE-U1-202014 105 516
- JP-A- 2002 076 416
- JP-A- 2002 237 612
- JP-A- 2003 229 591
- JP-A- 2004 335 903
- JP-A- 2006 080 568
- JP-A- 2014 236 199
- US-A1- 2011 005 583
- US-A1- 2012 324 808
- US-A1- 2014 053 890

## Beschreibung

Die Erfindung betrifft eine Photovoltaik(PV)-Anlage mit mehreren bifazialen Photovoltaik-Modulen, die aufrecht stehend an einer Tragkonstruktion angeordnet sind.

Eine solche PV-Anlage, insbesondere eine PV-Anlage nach dem Oberbegriff des Anspruchs 1, ist aus der Druckschrift JP 2002076416 bekannt.

Eine andere PV-Anlage mit einer solchen Tragstruktur ist aus der Druckschrift JP 2004335903 bekannt.

Klassische PV-Anlagen, die unifaziale PV-Module zur Stromerzeugung verwenden, werden häufig in geneigter Form aufgestellt. Dabei wird die einzige aktive Fläche der jeweiligen PV-Module, welche solare Strahlungsenergie in elektrische Energie wandeln kann, typischerweise nach Süden ausgerichtet. Solche Anlagen haben den Nachteil, dass sie ihre Spitzenleistung in der Mittagszeit abgeben. Dies kann das Stromnetz belasten, nämlich bei einem Überangebot derartigen Stromes.

Daher werden seit einigen Jahren auch PV-Anlagen mit PV-Modulen erprobt, welche beidseitig aktive Flächen aufweisen. Diese als bifazial bezeichneten PV-Module werden aufrecht positioniert, sodass Vorder- und Rückseite jeweils von der Sonne bestrahlt werden. Werden die bifazialen PV-Module derartiger PV-Anlagen in Nord-Süd-Richtung aufgestellt, so können sie Sonnenlicht aus östlichen und westlichen Richtungen, insbesondere in frühen Morgenstunden und späten Abendstunden, einfangen. Damit wird eine zu klassischen Anlagen komplementäre Leistungsabgabe erreicht, die um die Mittagszeit gering ausfällt, jedoch am Morgen und am Abend Spitzenwerte erreicht. Eine solche Strom-Tageskurven-Charakteristik ist im Sinne eines gleichmäßigen Stromangebots im Netz über den Tag verteilt vorteilhaft. Daneben können PV-Anlagen mit bifazialen PV-Modulen jedoch auch in anderen Orientierungen als in Nord-Süd-Richtung vorteilhaft eingesetzt werden.

Bei bifazialen PV-Modulen stellen sich im Unterschied zu unifazialen PV-Modulen neuartige technische Probleme, da auch die Rückseite der Module zur Stromerzeugung genutzt werden soll. Die bisher für unifaziale PV-Module entwickelten Tragkonstruktionen und Aufstellungskonzepte sind daher nur bedingt anwendbar, beziehungsweise würden aufwändige und daher teure Anpassungen erfordern.

Eine Aufgabe der vorliegenden Erfindung ist es daher, eine PV-Anlage bereit zu stellen, bei der mehrere bifaziale PV-Module in senkrechter Anordnung montiert werden können und die den speziellen Anforderungen von bifazialen Modulen gerecht wird. Hierzu soll insbesondere eine Tragkonstruktion bereitgestellt werden, die sich nicht nur kostengünstig fertigen lässt, sondern auch ein zügiges und daher preisgünstiges Aufstellen der PV-Anlage ermöglicht. Zudem soll die Tragkonstruktion eine ausreichende Standfestigkeit bei typischen Witterungsbedingungen aufweisen.

Der Erfindung liegt ferner die Aufgabe zugrunde, die Effizienz der Wandlung von Sonnenlicht in elektrische Energie für PV-Anlagen zu verbessern.

Zur Lösung dieser Aufgaben sind erfindungsgemäß bei einer Photovoltaik-Anlage die Merkmale von Anspruch 1 vorgesehen. Insbesondere wird somit erfindungsgemäß zur Lösung der Aufgabe bei einer Photovoltaik-Anlage der eingangs genannten Art vorgeschlagen, dass die Tragkonstruktion mehrere Pfosten aufweist, die an oder im Erdreich befestigt, insbesondere verankert, sind, wobei an den Pfosten Riegel befestigt sind, die jeweils zwei benachbarte Pfosten miteinander verbinden und wobei jeweils zwei Pfosten und zwei Riegel ein im Wesentlichen rechteckiges Montagefeld definieren, in dem mindestens ein PV-Modul angeordnet ist und dass an den Pfosten Durchstecköffnungen ausgebildet sind, um jeweils einen Riegel oder dessen Ende aufzunehmen.

Die Ausbildung von Durchstecköffnungen hat den Vorteil, dass Verkippungen der Pfosten gegeneinander und damit verbundene Schwankungen der Abstände zwischen den Pfosten leicht ausgeglichen werden können, indem die Riegel mehr oder weniger tief in die Durchstecköffnungen gesteckt werden. Es versteht sich, dass es für eine einfache Montage hierbei vorteilhaft ist, wenn die Durchstecköffnung etwas größer als der von ihr aufzunehmende Riegel ausgestaltet ist. Erfindungsgemäß kann jedoch insbesondere vorgesehen sein, dass die Durchstecköffnung in vertikaler Richtung mindestens das 1.25-fache, bevorzugt mindestens das 1.5-fache der Höhe eines Riegels aufweist. Damit wird eine Möglichkeit geschaffen, unterschiedliche Höhenlagen der Pfosten, beispielsweise in welligem Gelände, zumindest teilweise auszugleichen, indem die Riegel in verschiedenen Höhen montiert werden.

Ein erfindungsgemäßes Montagefeld kann demnach ein PV-Modul oder mehrere PV-Module aufnehmen, wobei auch weitere Unterteilungen des Montagefelds, beispielsweise mittels zusätzlicher Riegel und/oder vertikal verlaufender Zwischenpfosten, vorgesehen sein können. Als im Wesentlichen rechteckig kann das Montagefeld gemäß der Erfindung insbesondere dann angesehen werden, wenn das Montagefeld zur Aufnahme eines PV-Modules mit rechteckiger Außenkontur geeignet ist. Daher kann erfindungsgemäß insbesondere vorgesehen sein, dass jeweils zwei Pfosten und zwei Riegel ein Montagefeld definieren, in dem mindestens ein PV-Modul angeordnet ist, wobei Kanten der Pfosten und Riegel, welche zu den PV-Modulen ausgerichtet sind und somit das Montagefeld begrenzen, vorzugsweise gleichmäßig, beabstandet zu Außenkanten des mindestens einen PV-Moduls angeordnet sind.

In den allermeisten Aufstellungssituationen ist es vorteilhaft, wenn die mehreren bifazialen Photovoltaik-Module senkrecht stehend an der Tragkonstruktion angeordnet sind.

Mit anderen Worten stellt die Erfindung somit eine Tragkonstruktion bereit, bei der Pfosten und Riegel in bevorzugt regelmäßigen Abständen und bevorzugt in rechten Winkeln miteinander verbunden sind, sodass jeweils zwei Pfosten und zwei Riegel ein rechteckiges Montagefeld definieren, in welches ein bifaziales PV-Modul in senkrechter Aufhängung eingesetzt ist. Damit können die PV-Module beidseitig Sonnenlicht einsammeln, um dieses in elektrische Energie zu wandeln.

Erfindungsgemäß ist es für eine hohe Steifigkeit der Tragkonstruktion vorteilhaft, wenn zumindest einzelne Riegel beidseitig an Pfosten durch Befestigungsmittel befestigt sind. Hierbei kann eine zweckmäßige Befestigung der Riegel im Sinne der Erfindung insbesondere durch Verschraubungen, insbesondere Bohrschrauben oder Gewindeschrauben, durch Nieten, Stifte, sowie durch Verschweißen, Verkleben oder durch einfachen Formschluss realisiert sein.

Von Vorteil ist dabei, dass eine erfindungsgemäße PV-Anlage mit den Merkmalen des Anspruchs 1 kostengünstig hergestellt sowie effizient und daher kostengünstig aufgestellt werden kann. Gleichzeitig gewährleistet die erfindungsgemäße Tragkonstruktion eine hohe Stabilität, insbesondere gegen Windlasten sowie eine effiziente Ausnutzung der aktiven Flächen der bifazialen Module.

Erfindungsgemäß kann die Tragkonstruktion beispielsweise mittels einer Verankerung im Erdreich fundamentiert sein. Diese kann beispielsweise durch Erdanker, Erdschrauben, Rammpfosten oder Betonfundamente realisiert sein, wobei ergänzend Abspannungen vorgesehen sein können. Ist eine Verankerung im Erdreich zu vermeiden, zum Beispiel bei Aufstellung der PV-Anlage auf Deponieflächen, so kann erfindungsgemäß auch eine Fundamentierung der Tragkonstruktion mittels einer Beschwerung der Pfosten am Boden erreicht werden. Weiter können sowohl die Pfosten als auch die Riegel in Form von Längsprofilen, beispielsweise als Aluminium-Stranggussprofile, ausgestaltet sein, wodurch ein besonders sparsamer Materialeinsatz und damit eine leichte Tragkonstruktion ermöglicht werden. Erfindungsgemäß kann die Tragkonstruktion beispielsweise aus C-, S-, U-, Σ- oder Ω-Profilen, insbesondere aus Kombinationen solcher Profile, hergestellt sein. Hierbei können beispielsweise auch schräge und/oder runde Formelemente an den Pfosten und/oder Riegeln vorgesehen sein, um die Verschattung der PV-Module zu minimieren. Eine weitere erfindungsgemäße Ausgestaltung sieht Pfosten und/oder Riegel aus warm- oder kaltgewalztem Stahl vor, vorzugsweise versehen mit einem Korrosionsschutz.

Erfindungsgemäß kann die Aufgabe auch durch weitere vorteilhafte Ausführungen der Unteransprüche gelöst werden.

Beispielsweise ist es erfindungsgemäß vorteilhaft, wenn in der Gebrauchsstellung der PV-Anlage die Pfosten im Wesentlichen vertikal und/oder die Riegel im Wesentlichen horizontal ausgerichtet sind. Durch eine derartige Ausrichtung der Pfosten und Riegel kann insbesondere gewährleistet werden, dass zu den PV-Modulen ausgerichtete Kanten der Pfosten und Riegel, welche die einzelnen Montagefelder begrenzen, vorzugsweise gleichmäßig, beabstandet zu Außenkanten von rechteckigen PV-Modulen der PV-Anlage angeordnet sind. Hierdurch ist/sind für rechteckige PV-Module, die am Markt typisch sind, ein sparsamer Materialeinsatz für die Tragkonstruktion und/oder eine gute Flächenausnutzung erreichbar, da der Abstand der Pfosten und Riegel zu den PV-Modulen möglichst klein gewählt werden kann. Anders als bei herkömmlichen PV-Anlagen für unifaziale PV-Module wird hierbei insbesondere vermieden, dass Pfosten oder Riegel unterhalb beziehungsweise hinter einem PV-Modul verlaufen, was in einer unerwünschten Abschattung der PV-Module resultieren würde.

Daneben kann bei einer erfindungsgemäßen PV-Anlage beispielsweise vorgesehen sein, dass in vertikaler Richtung mehrere, insbesondere bis zu vier, PV-Module übereinander angeordnet sind. Durch das Vorsehen mehrerer übereinander verlaufender Reihen aus PV-Modulen lässt sich somit die nutzbare aktive Fläche insgesamt steigern, ohne dass zusätzliche Pfosten aufgestellt werden müssen. Das Vorsehen von mehr als vier übereinander angeordneten PV-Modulen hat erfindungsgemäß den Nachteil, dass die Windlast erheblich zunimmt, sodass die Fundamentierung der Pfosten wesentlich aufwendiger und damit teurer ausgestaltet sein muss. Daher schlägt die Erfindung vor, die Anzahl übereinander angeordneter Module auf vier zu begrenzen. Erfindungsgemäß liegt das Optimum der Zeilenzahl von übereinander angeordneten PV-Modulen zwischen zwei und drei.

Gemäß der Erfindung ist es ferner bevorzugt, wenn horizontal benachbarte PV-Module in vertikaler Richtung versetzt zueinander angeordnet sind. Durch diese, für klassische Anlagen untypische, Ausgestaltung wird eine besonders effiziente Bauweise der Tragkonstruktion ermöglicht. Dies gilt insbesondere dann, wenn der vertikale Versatz zwischen horizontal benachbarten PV-Modulen mindestens die Höhe eines Riegels beträgt. Damit können Riegel vertikal übereinander liegend an den Pfosten montiert werden, was für zahlreiche erfindungsgemäße Ausgestaltungen der Tragkonstruktion vorteilhaft ist. Insbesondere können somit die jeweiligen Befestigungspunkte von horizontal benachbarten Riegeln an einem Pfosten vertikal übereinander liegend angeordnet sein. Dies ermöglicht die effiziente Ausnutzung von Flanschen und Laschen an den Pfosten, wie noch genauer zu erläutern sein wird.

Für ein möglichst effizientes Aufstellen der Pfosten der PV-Anlage kann erfindungsgemäß vorgesehen sein, dass die Pfosten zumindest in einen mit dem Erdreich verbundenen Befestigungsabschnitt und einen mit dem Befestigungsabschnitt verbindbaren oder verbundenen Halteabschnitt unterteilt sind. Hierbei erstreckt sich der Halteabschnitt oberhalb des Befestigungsabschnitts. Von Vorteil ist dabei, dass der Befestigungsabschnitt zunächst unabhängig von dem Halteabschnitt in oder am Erdreich fundamentiert werden kann. Dies ist beispielsweise dann vorteilhaft, wenn der Befestigungsabschnitt durch Einrammen in das Erdreich fundamentiert werden soll. Hierzu kann der Befestigungsabschnitt insbesondere in Form eines Rammprofils ausgestaltet sein, sodass der Befestigungsabschnitt eine ausreichende Steifigkeit für ein Einrammen aufweist.

Sowohl Halteabschnitt als auch der Befestigungsabschnitt können erfindungsgemäß als Längsprofil, bevorzugt aus Metall, ausgestaltet sein. Von Vorteil ist dabei, dass insbesondere verschiedene Profile miteinander kombiniert werden können. Beispielsweise kann ein C-, U- oder Σ-Profil, das für ein Einrammen geeignet ist, als Befestigungsabschnitt mit einem S- oder Ω-Profil, die sich jeweils weniger für ein Einrammen eignen, als Halteabschnitt des Pfostens kombiniert werden. Ferner kann auch vorgesehen sein, dass der Halteabschnitt schwächer als der Befestigungsabschnitt ausgebildet ist, um Material einzusparen. Dies kann beispielsweise durch andere Profilwahl, insbesondere andere Profildimensionierung, oder durch eine Materialschwächung erreicht sein.

Nach dem Fundamentieren des Befestigungsabschnitts kann der Halteabschnitt an dem Befestigungsabschnitt ausgerichtet und fest mit diesem verbunden werden, beispielsweise mittels Schrauben mit selbstschneidendem Gewinde, die in, möglicherweise vorgebohrte, Löcher einschraubbar sind. Hierzu ist es erfindungsgemäß bevorzugt, wenn an dem Befestigungsabschnitt und dem Halteabschnitt jeweils korrespondierende Kontaktflächen ausgebildet sind. An diesen Kontaktflächen können die beiden Abschnitte aneinander anliegen und somit überlappen. Damit wird eine Möglichkeit geschaffen, Abweichungen der Höhe des Befestigungsabschnitts durch Ausrichten des Halteabschnitts in Bezug auf den Befestigungsabschnitt auszugleichen. Dazu kann der Halteabschnitt insbesondere bei Anliegen mit der Kontaktfläche an dem Befestigungsabschnitt entlang der Längsrichtung des Befestigungsabschnitts verschiebbar ausgestaltet sein.

Erfindungsgemäß kann die Überlappung zwischen Befestigungs- und Halteabschnitt ergänzend drehbar ausgestaltet sein. Damit können die beiden Abschnitte eines Pfostens bei Anliegen der korrespondierenden Kontaktflächen gegeneinander verdreht werden beziehungsweise verdreht sein. Dies kann beispielsweise durch eine plane Ausgestaltung der Kontaktfläche erreicht werden, sodass Befestigungs- und Halteabschnitt im montierten Zustand Rücken an Rücken aneinander liegen. Durch eine drehbare Ausgestaltung der Überlappung wird eine Verdrehung der Längsachsen der beiden Abschnitte des Pfostens gegeneinander ermöglicht, wodurch ein verbesserter Ausgleich von windschiefen Ausrichtungen des Befestigungsabschnitts erreicht wird, die beim Fundamentieren desselben entstehen können.

Gemäß der Erfindung ist es ferner vorteilhaft, wenn die einzelnen PV-Module, also insbesondere Außenkanten der PV-Module, von den Pfosten und/oder Riegeln beabstandet angeordnet sind. Denn damit können Abschattungen der aktiven Fläche der PV-Module durch Pfosten und/oder Riegel vermieden werden. Hierbei ist es erfindungsgemäß bevorzugt, wenn die Beabstandung nur so groß gewählt wird, dass eine Abschattung bis zu einem Einfallswinkel von maximal 75° ausgeschlossen ist. Damit wird ein übermäßiger Platzbedarf für die Beabstandung vermieden, sodass eine effiziente Flächenausnutzung ermöglicht wird. Generell ist es erfindungsgemäß bevorzugt, wenn die PV-Module mittig in Bezug auf die Außenkanten von Pfosten und/oder Riegeln montiert sind. Denn dadurch lässt sich eine minimale Abschattung beider Seiten der bifazialen PV-Module erzielen.

Unter Einfallswinkel wird hier und im Folgenden derjenige Winkel verstanden, den ein einfallender Sonnenstrahl mit einem Lot einer aktiven Fläche eines PV-Moduls einschließt. Somit entspricht ein senkrechter Lichteinfall auf die aktive Fläche eines PV-Moduls einem Einfallswinkel von 0°. Da die PV-Module senkrecht angeordnet sind, kann der Einfallswinkel insbesondere ein seitlicher Einstrahlwinkel sein.

Eine hoch effiziente PV-Anlage kann gemäß der Erfindung erreicht werden, wenn die aktiven Flächen der PV-Module von den Pfosten und/oder Riegeln beabstandet angeordnet sind. Dadurch kann weitgehend vermieden werden, dass bei schrägem Lichteinfall die Pfosten oder Riegel Randbereiche der aktiven Flächen der PV-Module verschatten, was sich negativ auf die Effizienz der Anlage auswirken würde.

Gemäß der Erfindung ist es besonders vorteilhaft, wenn die aktiven Flächen der PV-Module dabei derart von den Pfosten beabstandet sind, dass zumindest bis zu einem Einfallswinkel von 20°, besonders bevorzugt zumindest bis zu einem Einfallswinkel von 30°, eine Abschattung der aktiven Fläche durch Pfosten ausgeschlossen ist. Alternativ oder ergänzend kann vorgesehen sein, dass die aktiven Flächen der PV-Module von den Riegeln derart beabstandet angeordnet sind, dass zumindest bis zu einem Einfallswinkel von 25°, bevorzugt zumindest bis zu einem Einfallswinkel von 30° oder sogar 40°, eine Abschattung der aktiven Fläche durch Riegel ausgeschlossen ist.

Eine noch kompaktere PV-Anlage kann erfindungsgemäß dadurch erreicht werden, dass die aktiven Flächen der PV-Module an einander gegenüberliegenden Seiten asymmetrisch beabstandet zu Pfosten und/oder Riegeln angeordnet sind. Beispielsweise kann vorgesehen sein, dass einzelne PV-Module so von den Pfosten beabstandet angeordnet sind, dass für nördliche Richtungen zumindest bis zu einem Einfallswinkel von 20°, bevorzugt zumindest bis zu einem Einfallswinkel von 30°, in Bezug auf die aktive Fläche des PV-Moduls eine Abschattung derselben ausgeschlossen ist, während für südliche Richtungen zumindest bis zu einem Einfallswinkel von 45°, bevorzugt zumindest bis zu einem Einfallswinkel von 60°, in Bezug auf die aktive Fläche des PV-Moduls eine Abschattung derselben ausgeschlossen ist.

Bei horizontal verlaufenden Riegeln genügt es gemäß der Erfindung, wenn die PV-Module nur zu solchen Riegeln beabstandet angeordnet sind, welche oberhalb des PV-Moduls verlaufen. Damit wird eine Abschattung der aktiven Fläche durch oberhalb verlaufende Riegel vermieden. Dagegen besteht für Module, die oberhalb eines horizontal verlaufenden Riegels angeordnet sind keine Gefahr einer Abschattung durch diesen unterhalb des Moduls verlaufenden Riegel, da das direkt einfallende Sonnenlicht von schräg oben auf die aktive Fläche trifft. Im Ergebnis kann somit erfindungsgemäß die aktive Fläche eines PV-Moduls oberhalb eines horizontal verlaufenden Riegels nahe an diesen heranrücken, um den Platzbedarf der PV-Anlage in vertikaler Richtung zu minimieren.

Soll die PV-Anlage in besonders windanfälligen Orten aufgestellt werden, so kann erfindungsgemäß vorgesehen sein, dass die PV-Module um eine Drehachse schwenkbar an der Tragkonstruktion aufgehängt sind. Hierbei ist es vorteilhaft, wenn die Drehachse in etwa parallel zu den Riegeln verläuft, denn damit kann eine Schwenkbarkeit bei kompaktem Montagefeld gewährleistet werden. Eine Schwenkbarkeit der PV-Module um eine Drehachse kann beispielsweise erreicht werden, indem die PV-Module lediglich an oberen Riegeln der Tragkonstruktion schwenkbar aufgehängt sind. Aufgrund der Schwenkbarkeit können sich die PV-Module bei starken Winden aus der Ebene heraus bewegen, die durch die Pfosten gebildet ist. Durch die dadurch entstehenden Lücken in den Montagefeldern kann der Wind somit nahezu ungehindert hindurch wehen, wodurch die auf die Tragkonstruktion wirkende Windlast erheblich vermindert ist. Von Vorteil ist dabei, dass die Tragkonstruktion insgesamt weniger stabil ausgestaltet werden muss, sodass beispielsweise die Pfosten weniger steif ausgebildet und somit insgesamt Materialkosten eingespart werden können.

Um eine möglichst einfache Montage der PV-Anlage zu ermöglichen sieht die Erfindung vor, dass an den Pfosten Halteflächen ausgebildet sind, an denen ein zugehöriger Riegel flächig befestigbar ist. Durch das flächige Anliegen eines Riegels an einer Haltefläche können von dem Riegel eingeleitete Kräfte und Momente effektiv von dem Pfosten aufgenommen werden.

Erfindungsgemäß können die Halteflächen besonders einfach als Flansche an einem Profil und/oder als Laschen an einer Öffnung, beispielsweise eingebracht in eine Außenfläche eines Profils, ausgebildet sein. Hierzu kann auch vorgesehen sein, dass Halteflächen auf einer Seite eines Pfostens als Flansche und auf der anderen Seite als Laschen ausgebildet sind. Laschen oder Flansche werden somit gemäß der Erfindung als Alternativen angesehen, wobei es erfindungsgemäß sowohl für Laschen als auch Flansche bevorzugt ist, wenn diese rechtwinklig von den Pfosten abstehen und/oder in Richtung einer Ebene, vorzugsweise seitlich versetzt zu dieser verlaufen, die durch die PV-Module gebildet wird. Ferner können auch Bohrungen, Langlöcher oder dergleichen an Laschen und/oder Flanschen vorgesehen sein, um die Befestigung der Riegel mittels Schrauben oder dergleichen zu erleichtern.

Ein als Haltefläche dienender Flansch kann erfindungsgemäß insbesondere entlang eines gesamten Halteabschnitts eines Pfostens verlaufen; der Flansch kann somit Teil eines Profils sein; er kann aber auch nachträglich an einen Pfosten angefügt worden sein, beispielsweise durch Anschweißen. Bei Verwendung von Profilen, die nur einfache Flansche an ihren Enden aufweisen, beispielsweise einem S-Profil, können erfindungsgemäß zusätzliche, an ein Profil anschraubbare Winkelverbinder vorgesehen sein. Damit lässt sich bei Befestigung eines Riegels an einem einfachen Flansch in Verbindung mit einem Winkelverbinder, ein geschlossener, umlaufender Kraftfluss bilden und somit die Steifigkeit der Konstruktion erhöhen. Daneben können Flansche an Pfosten erfindungsgemäß auch lediglich dazu vorgesehen sein, die Biegesteifigkeit der Pfosten zu erhöhen.

Die Form einer Lasche kann erfindungsgemäß durch die Form der zugehörigen Öffnung in einem Profil vorgegeben sein, beispielsweise indem die Öffnungen und zugehörigen Laschen durch Prozesse wie Stanzen oder Laserschneiden in Verbindung mit Biegen oder Formen kostengünstig an den Pfosten erzeugt werden. Hierbei kann aus einer Öffnung auch ein Laschenpaar gebildet sein, welches beidseitig der Öffnung angeordnet ist, um ein beidseitiges Fassen eines Riegels zu ermöglichen.

Die Robustheit und Steifigkeit der Tragkonstruktion lässt sich erfindungsgemäß weiter steigern, wenn die Halteflächen paarweise ausgebildet sind. Denn ein Paar aus Halteflächen kann einen zwischen diesen Halteflächen eingeschobenen Riegel beidseitig fassen, und somit das Ableiten von Kräften weiter verbessern. Um ein beidseitiges Umfassen eines Riegels durch Halteflächen zu erleichtern, ist es zudem vorteilhaft, wenn die Riegel schmaler als die Pfosten, insbesondere schmaler als ein Abstand zwischen paarweise ausgebildeten Halteflächen, ausgebildet sind.

Alternativ oder ergänzend kann auch vorgesehen sein, Riegel mittels Winkelverbindern an den Pfosten zu befestigen. Hierbei sind erfindungsgemäß solche Winkelverbinder bevorzugt, die zu beiden Seiten eines zu befestigenden Riegels Halteflächen aufweisen, die flächig mit einem Pfosten verbindbar sind.

Im Gegensatz zu seitlich an Außenflächen der Pfosten mittels befestigter Winkelverbinder gebildeter Durchsteckkanäle bieten Durchstecköffnungen zudem den Vorteil, dass diese erfindungsgemäß mittig in Bezug auf den Pfosten angeordnet werden können. Damit lässt sich besonders einfach erreichen, dass die PV-Module in Bezug auf Pfosten und/oder Riegel mittig platziert sind. Eine solche Anordnung ist erfindungsgemäß wegen minimierter Abschattung auf beiden Seiten eines PV-Moduls bevorzugt.

Bei Verwendung von Durchstecköffnungen ist es besonders vorteilhaft, wenn zumindest der Halteabschnitt des Pfostens in Form eines Omega-Profils ausgebildet ist. Denn bei Verwendung eines Omega-Profils können zwei horizontal benachbarte Riegel von den beiden offenen Enden des Omega-Profils, die durch ein entlang des Profils verlaufendes paralleles Flanschpaar gebildet sein können, beidseitig gefasst sein. Dadurch kann ein geschlossener Kraftfluss in dem Omega-Profil ausgebildet werden. Hierbei können einzelne Riegel durch in Seitenflächen des Omega-Profils ausgebildete Durchstecköffnungen geführt sein. Bei dieser Ausgestaltung können somit links und rechts eines als Omega-Profil ausgestalteten Pfostens verlaufende Riegel an einem auf einer Seite des Pfostens verlaufenden Flanschpaar befestigt sein. Damit ist eine besonders einfach zu montierende und dennoch robuste Ausgestaltung der Tragkonstruktion benannt.

Eine ähnlich robuste Verbindung zwischen Pfosten und Riegel unter Verwendung von Durchstecköffnungen lässt sich erfindungsgemäß erreichen, wenn zumindest der Halteabschnitt des Pfostens in Form eines C- oder U-Profils ausgebildet ist. In diesem Fall können an Seitenflächen des jeweiligen Profils Durchstecköffnungen ausgebildet sein, die aufgebogene Laschen aufweisen, die ihrerseits Halteflächen zur Montage von Riegeln bereitstellen.

Sollen zwei links und rechts eines Pfostens verlaufende Riegel an einer Lasche montiert werden, ist es vorteilhaft, wenn die Höhe der Lasche mehr als das 1.25-fache der Höhe eines Riegels aufweist, bevorzugt mindestens 1.5-mal die Höhe eines Riegels aufweist. Durch diese Ausgestaltung ist eine Lasche, beziehungsweise ein Laschenpaar, einer Durchstecköffnung somit hoch genug, um zwei Riegel zu halten. Eine zusätzlich höher ausgestaltete Durchstecköffnung kann dennoch gemäß der Erfindung nützlich sein, um einen verbesserten Ausgleich der Montagehöhe von Riegeln zu ermöglichen.

Bei einer Ausgestaltung der Erfindung können Durchstecköffnungen eine oder mehrere, wie bereits zuvor beschriebene Laschen aufweisen, die Halteflächen zur Montage eines Riegels, bevorzugt von zwei Riegeln, bereit stellen. Damit ergeben sich mannigfaltige Ausgestaltungen, auch in Verbindung mit Omega-Profilen. Im Gegensatz zu separat zu befestigenden Winkelverbindern bieten Laschen den Vorteil eines geringeren Montageaufwands, da sie nicht wie Winkelverbinder an den Profilen befestigt werden müssen. Zudem sind aufgebogene Laschen in der Regel drehfest mit einer Vertikalfläche eines Profils verbunden, wodurch auf einfache Weise eine hohe Verwindungssteifigkeit der Tragkonstruktion erreicht wird.

Allgemein, insbesondere bei allen bisher beschriebenen Ausgestaltungen von Durchstecköffnungen, kann insbesondere vorgesehen sein, dass einzelne Durchstecköffnungen wenigstens zweimal, insbesondere wenigstens dreimal, die Höhe eines Riegels aufweisen. Durch diese Ausgestaltung kann ein Riegel oder insbesondere zwei Riegel, in einer Durchstecköffnung platziert sein, wobei, durch die größere Ausgestaltung der Durchstecköffnung, die Montagehöhe des Riegels, beziehungsweise der Riegel, in Bezug auf die Durchstecköffnung variabel sein kann, also insbesondere bei der Montage variiert werden kann. Dadurch lässt sich ein Höhenausgleich erreichen, was insbesondere bei welligem Aufstellgelände von Vorteil ist.

Alternativ zur Aufnahme von mindestens zwei Riegeln in einer Durchstecköffnung sieht eine weitere Ausgestaltung der Erfindung vor, dass in einer Durchstecköffnung nur ein Riegel platziert ist, während ein weiterer Riegel auf einer der Durchstecköffnung gegenüberliegenden Seite des Pfostens ohne Durchstecköffnung und mittels am Pfosten ausgebildeter Halteflächen montiert ist. Hierbei kann insbesondere vorgesehen sein, dass der durch die Durchstecköffnung geführte Riegel auf der der Durchstecköffnung gegenüberliegenden Seite des Pfostens an derselben Haltefläche wie der weitere Riegel montiert ist. Mit anderen Worten kann gemäß einer Ausgestaltung der Erfindung insbesondere vorgesehen sein, dass an einer Haltefläche ein durch eine Durchstecköffnung gesteckter Riegel und ein weiterer Riegel befestigt sind.

Eine weitere erfindungsgemäße Ausgestaltung sieht vor, dass die Pfosten zumindest in dem oder einem Halteabschnitt ein Profil mit einer C-förmigen oder U-förmigen Grundform aufweisen. Hierbei können an den Enden des Profils zusätzliche Halteflächen als Flansche ausgebildet sein. Die Flansche können entweder während der Herstellung des Profils ausgebildet oder nachträglich an dem Profil befestigt worden sein.

Gemäß einer wieder anderen erfindungsgemäßen Ausgestaltung kann vorgesehen sein, dass die Pfosten zumindest in dem oder einem Halteabschnitt ein Profil mit einer Z-förmigen oder S-förmigen Grundform aufweisen, wobei an den Enden des Profils zusätzliche Halteflächen als Flansche ausgebildet sind. S-förmige Profile sind im Handel teilweise auch als "Z-plus"-Profile bekannt. "Zusätzliche Halteflächen/Flansche" ist hier, wie auch bereits zuvor bei den C- oder U-förmigen Profilen, so zu verstehen, dass die Grundform der Profile bereits ohne die Flansche gegeben ist, auch wenn diese bereits beim Herstellen des Profils erzeugt werden.

Für eine besonders einfache und dennoch robuste Montage der PV-Module ist es erfindungsgemäß bevorzugt, wenn die PV-Module an den Riegeln befestigt sind. Werden Module im Querformat/Hochformat montiert, erfolgt demnach die Halterung der Module entlang deren längeren/kürzeren Seiten. Hierzu können erfindungsgemäß spezielle Halteelemente vorgesehen sein. Vorzugsweise stellen diese Halteelemente Nutabschnitte bereit, in die ein Rand des jeweiligen PV-Moduls eingesteckt oder einsteckbar ist, vorzugsweise unter Verzicht auf eine kraftschlüssige Verbindung. Hierbei können die Nutabschnitte mit einem plastischen oder elastischen Material, vorzugsweise EPDM, ausgekleidet sein, um die PV-Module vor Beschädigungen zu schützen. Ferner kann ergänzend vorgesehen sein, die PV-Module mit den Halteelementen zu verkleben, um ein Verrutschen der PV-Module in den Nutabschnitten zu unterbinden.

Die Halteelemente können erfindungsgemäß beispielsweise als kaltgeformte Stahlteile, vorzugsweise aus korrosionsbeständigem Stahl und/oder mit Korrosionsschutz, gefertigt sein oder aus Kunststoff oder aus Leichtmetallen wie Aluminium und insbesondere einen Belag aus Gummi aufweisen. Die Halteelemente können ferner in Form von Profilen oder als Spritz- oder Druckgussteile hergestellt sein.

Erfindungsgemäß sind die PV-Module im Bereich der Nutabschnitte bevorzugt beidseitig von dem jeweiligen Halteelement gefasst, sodass eine sichere Halterung der PV-Module gewährleistbar ist.

Es versteht sich, dass Halteelemente wie zuvor beschrieben in analoger Anwendung der Erfindung auch zur Befestigung von PV-Modulen an den Pfosten eingesetzt werden können.

Besonders bevorzugt sind an den Halteelementen jeweils zwei gegenüberliegende Nutabschnitte ausgebildet. Somit kann ein einzelnes Halteelement zwei sich gegenüber liegende PV-Module halten. Hierbei ist es vorteilhaft, wenn die zwei Nutabschnitte in einer gemeinsamen Ebene verlaufen. Ergänzend oder alternativ kann auch vorgesehen sein, dass die zwei Nutabschnitte jeweils mittig in Bezug auf seitliche Außenflächen des Halteelements angeordnet sind. Durch derartige Ausgestaltungen wird eine, erfindungsgemäß bevorzugte, mittige Positionierung für alle PV-Elemente in Bezug auf Pfosten und/oder Riegel wesentlich erleichtert.

Ferner kann auch vorgesehen sein, dass die Halteelemente jeweils eine, vorzugsweise rechtwinklige, Querschnittsverjüngung aufweisen. An der Stelle, an der sich der Querschnitt ändert, kann somit ein Anschlag an dem Halteelement ausgebildet sein. Damit kann das Halteelement in eine an einem Riegel ausgebildete Öffnung bis zu einer definierten Einstecktiefe einsteckbar oder eingesteckt sein. Hierzu kann demnach erfindungsgemäß vorgesehen sein, dass die Riegel, insbesondere mittig angeordnete, zu den Halteelementen korrespondierende Durchstecköffnungen aufweisen. Diese Durchstecköffnungen an den Riegeln können insbesondere derart ausgebildet sein, dass ein Verrutschen der Halteelemente in Längsrichtung des Riegels ausgeschlossen ist.

Ein wesentlicher Vorteil dieser Ausgestaltung besteht darin, dass es für eine robuste Positionierung der PV-Module ausreichend ist, das Halteelement im Bereich einer oberen Nut an dem das Halteelement aufnehmenden Riegel zu befestigen, beispielsweise mittels einer Verschraubung; eine zusätzliche Befestigung im Bereich der zweiten, unteren Nut ist somit entbehrlich. Damit wird nicht nur Montageaufwand gespart, sondern die Halteelemente können in einem jeweiligen unteren Bereich, der eine untere Haltenut umgibt, schmaler als in einem oberen Bereich ausgebildet werden, was vorteilhaft ist, um Verschattungen der PV-Module zu vermeiden.

Für ein positionssicheres und verkippungsfreies Montieren der Halteelemente ist es zudem erfindungsgemäß vorteilhaft, wenn an dem Halteelement eine Anlagefläche ausgebildet ist mit der das Halteelement flächig an dem Riegel anliegt.

Eine weitere Optimierung der Halteelemente gemäß der Erfindung sieht vor, dass diese an einer Unterseite eine Abschrägung aufweisen, sodass eine Abschattung eines PV-Moduls vermieden werden kann, das in eine untere Nut des Halteelements eingesetzt ist.

Als alternative oder ergänzende Ausgestaltung zu separaten Halteelementen kann erfindungsgemäß vorgesehen sein, dass an den Riegeln Nutabschnitte ausgebildet werden, in die ein jeweiliges PV-Modul einsteckbar ist. Diese Nuten können beispielsweise auch nur an einer Oberseite eines Riegels ausgebildet sein und/oder sich insbesondere über die gesamte Länge eines Riegels erstrecken. Von Vorteil ist dabei, dass die PV-Module bei der Montage direkt in die Nuten der Riegel eingesetzt werden können, sodass die Anzahl an zu montierenden Halteelementen verringert werden kann. Diese Vorgehensweise kann den Montageaufwand senken und damit Kosten sparen.

Analog zu den Halteelementen kann auch für Riegel vorgesehen sein, dass Riegel an einer Unterseite eine Abschrägung aufweisen. Damit können auch noch für Randbereiche der aktiven Fläche des PV-Moduls jeweils große Einfallswinkel ohne Abschattung durch den jeweiligen Riegel gewährleistet werden.

Die Erfindung hat darüber hinaus erkannt, dass es vorteilhaft sein kann, die Tragkonstruktion so auszulegen, dass eine, insbesondere landwirtschaftliche, Bewirtschaftung der Fläche, auf der die PV-Anlage aufzustellen ist, insbesondere von Bewirtschaftungsfreiräumen zwischen einzelnen Reihen, weiterhin möglich bleibt. Hierzu sieht die Erfindung vor, dass zwischen dem Erdreich und einem untersten Riegel der Tragkonstruktion ein Freiraum freigehalten ist. Dieser Freiraum kann erfindungsgemäß wenigstens 50 cm, bevorzugt wenigstens 60 cm, besonders bevorzugt wenigstens 1 m Höhe aufweisen. Es versteht sich, dass der Freiraum somit lediglich durch die notwendigen Pfosten unterbrochen wird.

Bei Aufstellung der PV-Module in Reihen kann hierbei insbesondere vorgesehen sein, dass die Reihen der PV-Anlage derart beabstandet angeordnet sind, dass zwischen den Reihen ein Bewirtschaftungsfreiraum mit einer Breite von wenigstens 6 Metern, wenigstens 8 Metern oder wenigstens 10 Metern besteht.

Für eine möglichst effiziente Flächenausnutzung, also insbesondere für eine maximale Energieerzeugung pro Fläche, kann es erfindungsgemäß vorteilhaft sein, wenn die PV-Module mit der Tragkonstruktion im Wesentlichen eine Ebene bilden. Entsprechend können dafür die Pfosten entlang einer im Wesentlichen geraden Linie aufgestellt sein. Ab einer gewissen Mindestbreite der Aufstellfläche können die PV-Module auch in mehreren Reihen angeordnet sein. Hierbei ist es vorteilhaft, wenn diese Reihen, vorzugsweise gleichmäßig, voneinander beabstandet angeordnet sind. Denn erfindungsgemäß kann je nach Höhe einer Reihe der PV-Anlage ein Mindestabstand zu einer in Sonnenrichtung benachbarten Reihe derart gewählt sein, dass eine Abschattung der aktiven Flächen der PV-Module durch die benachbarte Reihe weitgehend ausgeschlossen ist. Hierbei können auch Reihen mit unterschiedlichen Höhen, also beispielsweise mit einer unterschiedlichen Anzahl an übereinander angeordneten PV-Modulen, vorgesehen sein.

Bei einer besonders vorteilhaften Ausgestaltung der Erfindung kann vorgesehen sein, dass die PV-Module im Wesentlichen in Nord-Süd-Richtung ausgerichtet sind. Bei einer Nord-Süd-Ausrichtung sind die Flächennormalen der beiden aktiven Seiten eines bifazialen PV-Moduls jeweils nach Osten und Westen ausgerichtet. Hierbei können erfindungsgemäß Winkelabweichungen von +/-30° vorgesehen sein, weshalb die Ausrichtung als "im Wesentlichen" in Nord-Süd-Richtung verlaufend beschrieben wird. Durch derartige Ausgestaltungen kann mit der PV-Anlage eine wie eingangs beschriebene Strom-Tageskurven-Charakteristik erzielt werden, die um die Mittagszeit gerade keine Spitzenleistung aufweist. Erfindungsgemäße PV-Anlagen können jedoch in einer Vielzahl an weiteren Orientierungen in Bezug auf die Himmelsrichtung in vorteilhafter Weise eingesetzt werden.

Gemäß der Erfindung kann die Flächenausnutzung der PV-Anlage mit noch hinnehmbaren Einbußen in der Effizienz der Energiewandlung optimiert werden, wenn ein Abstand zwischen zwei Reihen wenigstens das Dreifache, bevorzugt wenigstens das Vierfache, besonders bevorzugt wenigstens das Fünffache einer maximalen Höhe einer aktiven Fläche der PV-Anlage beträgt. Damit lässt sich je nach geographischer Breite des Aufstellungsorts der PV-Anlage, eine Abschattung von PV-Modulen durch eine benachbarte Reihe weitgehend vermeiden, insbesondere am Morgen und am Abend. Die maximale Höhe einer aktiven Fläche der PV-Anlage kann beispielsweise durch einen vertikalen Abstand zwischen einem höchstgelegenen und einem niedrigstgelegenen Punkt, jeweils innerhalb der aktiven Flächen einer Reihe der PV-Anlage, definiert sein (vgl. hierzu auch die Figurenbeschreibung).

Verschattungen sind bekanntermaßen deshalb nachteilig, da die einzelnen Zellen eines PV-Moduls typischerweise in Reihe zu Zellstrings geschaltet sind und somit die am schwächsten belichtete Zelle den tatsächlich fließenden Strom begrenzt. Zwar sind im Stand der Technik sogenannte Bypass-Dioden bekannt, die standardmäßig in PV-Modulen mit vorgesehen sind, um die Auswirkungen von Teilabschattungen der aktiven Fläche eines PV-Moduls zu minimieren. Die ausschließliche Nutzung von Bypass-Dioden zur Minimierung der Effekte durch Abschattung ist aber mit erheblichen Nachteilen verbunden. Beispielsweise kommt es zu einer starken Wärmeentwicklung, sobald eine Bypass-Diode durchschaltet, um einen abgeschatteten Bereich einer aktiven Fläche elektrisch zu überbrücken. Gerade bei PV-Anlagen im Sinne der Erfindung bei denen täglich mit Abschattungen zu rechnen ist, ist eine solche Vorgehensweise jedoch nicht akzeptabel, da sich eine häufige Wärmeentwicklung negativ auf die Lebensdauer der PV-Module auswirken kann. Ein weiterer Nachteil besteht darin, dass viele am Markt verwendeten Wechselrichter trotz vorhandener Bypassdioden einen für das PV-Modul ungünstigen Arbeitspunkt einstellen, sodass weitere Leistungsverluste in den PV-Modulen auftreten, die an dem betroffenen Wechselrichter angeschlossen sind.

Zur Erhöhung der Effizienz der Energiewandlung einer PV-Anlage sind daher alternativ die Merkmale des zweiten unabhängigen Anspruchs vorgesehen, der auf eine PV-Anlage mit wenigstens einem bifazialen PV-Modul gerichtet ist. Insbesondere wird somit für eine Photovoltaik-Anlage mit mindestens einem bifazialen PV-Modul, die insbesondere durch die zuvor beschriebenen Ausgestaltungen der Tragkonstruktion weitergebildet werden kann, erfindungsgemäß zur Lösung der eben genannten Aufgabe vorgeschlagen, dass eine elektrische Verschaltung von aktiven Flächen der PV-Anlage, insbesondere aller aktiver Flächen, derart gewählt ist, dass aktive Flächen der elektrischen Verschaltung, die sich auf unterschiedlichen Höhen befinden, an unterschiedlichen elektrischen Arbeitspunkten betreibbar sind. Hierbei kann insbesondere vorgesehen sein, dass obere (also oben angeordnete) aktive Flächen zu unteren (also unten angeordnete) aktiven Flächen elektrisch parallel geschalten sind. Alternativ oder auch ergänzend können obere aktive Flächen seriell miteinander verbunden sein und/oder untere aktiven Flächen können seriell miteinander verbunden sein.

Gemäß einer weiteren Ausgestaltung der Erfindung kann für eine solche Verschaltung eine elektrische modulfreie Rückführung, beispielsweise mittels Kabeln, vorgesehen sein, sodass also keine PV-Module die Rückführung unterbrechen. Eine solche elektrische modulfreie Rückführung kann insbesondere korrespondierend zu in Serie geschalteten PV-Modulen ausgeführt sein. Derartige Rückführungen werden in herkömmlichen PV-Anlagen mit unifazialen PV-Modulen bisher aus Kostengründen als auch aus technischen Gründen vermieden. Die Erfindung hat jedoch erkannt, dass der enorme Einfluss der Verschattung auf PV-Anlagen mit senkrecht stehenden PV-Modulen solche Rückführungen erfordern kann, wenn eine optimale elektrische Verschaltung der PV-Module gewährleistet werden soll.

Die Erfindung hat zudem erkannt, dass es bei Verwendung von aufrecht stehenden bifazialen PV-Modulen für eine PV-Anlage große Vorteile bringt, wenn alle aktiven Flächen, die sich auf unterschiedlichen Höhen befinden, an unterschiedlichen Arbeitspunkten betreibbar sind, solange von dieser Regel lediglich in Randbereichen der PV-Anlage abgewichen wird.

Eine solche Ausgestaltung bedeutet, dass insbesondere Ströme, welche durch in unterschiedlichen Höhen angeordnete aktive Flächen eines oder mehrerer PV-Module der PV-Anlage fließen, variieren können. Durch diese Ausgestaltung kann also vermieden werden, dass beispielsweise eine Abschattung einer unteren aktiven Fläche, die Stromproduktion in einer oberen aktiven Fläche begrenzt, wie dies der Fall ist, wenn obere und untere aktive Flächen eines oder mehrerer PV-Module elektrisch in Serie geschaltet werden.

Seit einiger Zeit sind zudem rechteckige bifaziale PV-Module auf dem Markt erhältlich, die zwei elektrisch getrennte aktive Flächen aufweisen, wobei typischerweise jede dieser aktiven Flächen mehrere Zellstrings aufweist und die elektrisehe Trennung parallel zur kürzeren Seite des Moduls verläuft. Die Erfindung schlägt hier vor, solche bifazialen PV-Module mit elektrisch getrennten aktiven Flächen im Hochformat aufzustellen, sodass obere und untere aktive Flächen im Sinne der Erfindung gebildet sind.

Die Aussage, dass die aktiven Flächen elektrisch voneinander getrennt sind, kann im Sinne der Erfindung hier insbesondere so verstanden werden, dass diese aktiven Flächen nicht miteinander in einer Serienschaltung verbunden sind; eine elektrische Parallelschaltung der aktiven Flächen, auch innerhalb des PV-Moduls, kann dagegen vorgesehen sein.

Die Erfindung schlägt ferner vor, die jeweils oberen aktiven Flächen solcher bifazialer PV-Module elektrisch parallel geschaltet zu den jeweils unteren aktiven Flächen zu betreiben, sodass die oberen aktiven Flächen in einem elektrischen Arbeitspunkt arbeiten können, der sich von demjenigen der unteren aktiven Flächen unterscheidet. Bei einer Abschattung bereits einer der unteren aktiven Flächen bleibt der Stromfluss durch die obere aktive Fläche beziehungsweise durch die oberen aktiven Flächen somit unbeeinflusst, da ein zu der unteren abgeschatteten aktiven Fläche paralleler Strompfad durch die obere aktive(n) Fläche(n) besteht. Ein elektrischer Arbeitspunkt im Sinne der Erfindung kann also insbesondere durch einen elektrischen Strom definiert sein, der durch die entsprechende aktive Fläche fließt.

Es versteht sich, dass im Sinne der Erfindung aktive Flächen, also insbesondere PV-Module als Ganzes, die auf annähernd gleicher Höhe angeordnet sind, in Reihe geschaltet sein können. Werden aktive Flächen der PV-Anlage, die in annähernd gleicher Höhe angeordnet sind, in Reihe geschaltet, so kann von einer erfindungsgemäßen elektrischen Zeile gesprochen werden.

Eine Ausgestaltung der Erfindung schlägt somit vor, elektrisch voneinander getrennte elektrische Zeilen durch serielle Verschaltung von aktiven Flächen anzulegen, diese elektrische Zeilen in unterschiedlichen Höhen anzuordnen sowie vorzugsweise die elektrischen Zeilen elektrisch parallel geschaltet zu betreiben. Somit können die Durchflussströme in den einzelnen elektrischen Zeilen variieren, was gleichbedeutend ist mit der Aussage, dass aktive Flächen in unterschiedlichen elektrischen Zeilen in unterschiedlichen Arbeitspunkten, also insbesondere bei unterschiedlichen Strömen, betreibbar sind.

Eine mögliche Realisierung einer PV-Anlage gemäß dem zweiten unabhängigen Anspruch mit einer oberen und einer unteren aktiven Fläche die in unterschiedlichen Arbeitspunkten betreibbar sind besteht somit in der Serienschaltung von PV-Modulen zu, vorzugsweise übereinander angeordneten, elektrischen Zeilen und dem Betrieb dieser elektrischen Zeilen in Parallelschaltung beispielsweise an einem gemeinsamen Wechselrichtereingang oder aber an unterschiedlichen Wechselrichtereingängen.

Die Nutzung elektrisch getrennter aktiver Flächen eines oder mehrerer PV-Module durch deren Betrieb in voneinander getrennten elektrischen Zeilen kann insbesondere in den Randstunden eines Tages von Vorteil sein, da bei einer teilweisen Abschattung des PV-Moduls aufgrund eines niedrigen Sonnenstands typischerweise nur die untere elektrische Zeile weniger effektiv ist und die obere elektrische Zeile, die noch voll bestrahlt ist, im Normalbetrieb arbeiten kann. Bei einer Aufstellung von wie zuvor beschriebenen PV-Modulen mit elektrisch getrennten aktiven Flächen im Querformat wäre dagegen das gesamte Modul im Wirkungsgrad vermindert, da beide aktive Flächen teilweise abgeschattet würden.

Da erfindungsgemäß übereinander angeordnete elektrische Zeilen parallel geschaltet betrieben werden können, kann vermieden werden, dass sich eine Abschattung einer Zeile und die damit einhergehende Begrenzung des Stromflusses in dieser Zeile auf eine benachbarte (typischerweise darüber liegende) Zeile auswirkt. Eine erfindungsgemäße elektrische Zeile kann beispielsweise bereits durch eine von zwei elektrisch voneinander getrennten, aktiven Flächen eines PV-Moduls gebildet sein.

Entsprechend einer weiteren Ausgestaltung der Erfindung lassen sich hohe Ausgangsleistungen der PV-Anlage besonders kostengünstig erzielen, wenn eine wie zuvor beschriebene elektrische Zeile durch serielle Verschaltung von aktiven Flächen, insbesondere von mindestens zwei bifazialen PV-Modulen, gebildet ist. Wie zuvor erläutert erlaubt die elektrische Aufteilung in elektrische Zeilen, dass die Stromflüsse durch verschiedene elektrische Zeilen voneinander unabhängig sein / voneinander abweichen können.

Eine elektrische Zeile kann somit insbesondere durch die aktiven Flächen von horizontal benachbarten PV-Modulen gebildet sein. Hierzu ist es im Sinne der Erfindung vorteilhaft, wenn vorzugsweise solche aktive Flächen von PV-Modulen elektrisch miteinander in Reihe geschaltet sind, die in etwa in gleicher Höhe angeordnet sind. Innerhalb eines PV-Moduls kann es dagegen vorteilhaft sein, wenn die aktiven Flächen elektrisch parallel geschaltet sind, insbesondere wenn diese vertikal übereinander liegend angeordnet sind.

Im Sinne der Erfindung ist es besonders vorteilhaft, wenn jede elektrische Zeile mit einem Wechselrichtereingang elektrisch verbunden ist. Erfindungsgemäß können dabei einzelne Zeilen mit Wechselrichtereingängen von verschiedenen Wechselrichtern oder mit einem Wechselrichtereingang eines gemeinsamen Wechselrichters verbunden sein.

Die Erfindung hat somit erkannt, dass eine elektrische Zeile über mehrere bifaziale PV-Module hinweg gebildet werden kann, sodass insbesondere nicht jedes bifaziale PV-Modul an einen eigenen Wechselrichter angeschlossen sein muss, was Kosten sparen kann. Hierbei kann eine Zeile insbesondere kürzer als eine Reihe von Pfosten mit dazwischen montierten PV-Modulen sein. Denn bei serieller Verschaltung von aktiven Flächen addieren sich die in ihnen erzeugten elektrischen Spannungen, sodass typischerweise die Anzahl an miteinander in Reihe zu schaltenden aktiven Flächen begrenzt werden muss.

Ohne Begrenzung der Erfindung oder Widerspruch kann es beispielsweise in Randbereichen einer Reihe erfindungsgemäß vorgesehen sein, auch übereinander angeordnete aktive Flächen, entweder innerhalb eines PV-Moduls oder über mehrere PV-Module hinweg, miteinander in Serie zu schalten. Denn somit kann auch in Randbereichen eine effiziente und kostengünstige Stromerzeugung, insbesondere bei ausreichend hoher elektrischer Spannung, gewährleistet werden. Dabei wird eine Teilreduktion der Effizienz der gesamten PV-Anlage bei Abschattung von Teilen der Randbereiche bewusst in Kauf genommen.

Gemäß einer weiteren Ausgestaltung der Erfindung wird es als vorteilhaft angesehen, wenn die PV-Module, bevorzugt wenn jedes PV-Modul, wenigstens zwei elektrisch voneinander getrennte aktive Flächen aufweist, die jeweils unterschiedlichen elektrischen Zeilen zugeordnet sind. Denn dadurch kann auch bei Teilabschattung eines PV-Moduls eine hohe Effizienz in der Wandlung von auf das PV-Modul auftreffender Strahlung in elektrische Energie aufrechterhalten werden und zwar für die gesamte PV-Anlage.

Schließlich kann erfindungsgemäß auch vorgesehen sein, dass eine PV-Anlage mit mehreren, insbesondere zwei, erfindungsgemäß ausgestalteten elektrischen Zeilen, mit Merkmalen, wie zuvor beschrieben und/oder nach einem oder mehreren der Ansprüche 16 und 17, eine Tragkonstruktion aufweist mit erfindungsgemäßen Merkmalen wie zuvor dargelegt und/oder nach einem oder mehreren der Ansprüche 1 bis 15.

Zur Lösung der eingangs genannten Aufgabe ist auch eine spezifische Verwendung einer erfindungsgemäßen PV-Anlage wie zuvor beschrieben vorgesehen. Insbesondere wird somit erfindungsgemäß vorgeschlagen, dass eine erfindungsgemäße PV-Anlage, insbesondere wie zuvor beschrieben und/oder nach einem der auf eine Photovoltaik-Anlage gerichteten Ansprüche, derart verwendet wird, dass die PV-Module während der Stromerzeugung in etwa in Nord-Süd-Richtung ausgerichtet werden. Hierbei können erfindungsgemäß Winkelabweichungen von +/-30° vorgesehen sein, weshalb die Ausrichtung als "in etwa" in Nord-Süd-Richtung verlaufend beschrieben wird. Bei einer Nord-Süd-Ausrichtung eines PV-Moduls sind die Flächennormalen der beiden aktiven Seiten eines bifazialen PV-Moduls jeweils nach Osten und Westen ausgerichtet. Durch diese spezifische Verwendung lässt sich mit einer erfindungsgemäßen PV-Anlage eine wie eingangs beschriebene Strom-Tageskurven-Charakteristik erzielen, die um die Mittagszeit gerade keine Spitzenleistung aufweist.

Die Erfindung wird nun anhand von Ausführungsbeispielen näher beschrieben, ist aber nicht auf diese Ausführungsbeispiele beschränkt.

Weitere Ausführungsbeispiele ergeben sich durch Kombination der Merkmale einzelner oder mehrerer Schutzansprüche untereinander und/oder mit einzelnen oder mehreren Merkmalen des jeweiligen Ausführungsbeispiels. Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden.

Es zeigt:
- Fig. 1: eine dimetrische Ansicht einer erfindungsgemäßen Photovoltaik-Anlage,
- Fig. 2: eine Detailansicht einer Reihe aus Pfosten derselben PV-Anlage,
- Fig. 3: einen mittels eines C-Profils ausgestalteten erfindungsgemäßen Pfosten mit zwei montierten Riegeln,
- Fig. 4: einen mittels eines Omega-Profils ausgestalteten erfindungsgemäßen Pfosten mit zwei montierten Riegeln,
- Fig. 5: gestrichen

- Fig. 6: einen erfindungsgemäßen Riegel mit zwei sich gegenüberliegenden Nutabschnitten zur Aufnahme von zwei PV-Modulen,
- Fig. 7: einen Querschnitt durch ein erfindungsgemäßes Halteelement, das in einen durch ein U-Profil gebildeten Riegel eingelegt ist,
- Fig. 8: eine perspektivische Ansicht des Halteelements aus Fig.7, eingelegt in den U-förmigen Riegel,
- Fig. 9: eine Draufsicht auf einen Pfosten und zu diesem in erfindungsgemäßer Weise asymmetrisch in nördlicher beziehungsweise südlicher Richtung beabstandete PV-Module sowie deren aktive Flächen,
- Fig. 10: eine seitliche Querschnittsansicht eines horizontal verlaufenden Riegels und zu diesem oberhalb und unterhalb angeordneten PV-Modulen und deren aktiven Flächen,
- Fig. 11: eine Seitenansicht einer erfindungsgemäßen PV-Anlage mit zwei Reihen von Pfosten, die beabstandet aufgestellt sind.
- Fig. 12: eine erfindungsgemäße elektrische Verschaltung von PV-Modulen einer PV-Anlage,
- Fig. 13: eine weitere erfindungsgemäße elektrische Verschaltung von PV-Modulen einer PV-Anlage,
- Fig.14: eine Querschnittsansicht einer erfindungsgemäßen Aufhängung von PV-Modulen an einer erfindungsgemäßen Tragkonstruktion einer PV-Anlage.
- Fig.15: eine Querschnittsansicht einer weiteren erfindungsgemäßen Aufhängung von PV-Modulen an einer erfindungsgemäßen Tragkonstruktion einer PV-Anlage.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

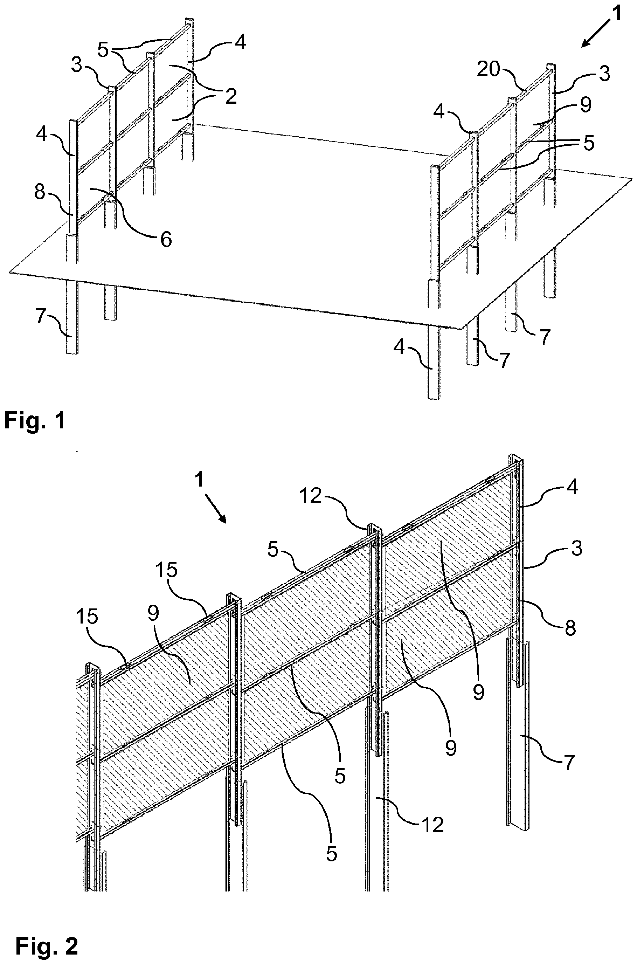

Die Figur 1 zeigt eine im Ganzen mit 1 bezeichnete Photovoltaik(PV)-Anlage mit mehreren bifazialen PV-Modulen 2, die aufrecht stehend an einer Tragkonstruktion 3 angeordnet sind. Die Tragkonstruktion 3 wird durch mehrere Pfosten 4 gebildet, die in einer Reihe aufgestellt sind. Genauer ist jeder Pfosten 4 in einen Befestigungsabschnitt 7 sowie einen damit verbundenen Halteabschnitt 8 aufgeteilt. Wie durch die horizontale Fläche, welche die Erdoberfläche illustriert, angedeutet wird, ist die Tragkonstruktion 3 mittels der Befestigungsabschnitte 7 im Erdreich verankert.

Wie die Figur 1 zeigt, verlaufen zwischen den Pfosten 4 mehrere Riegel 5 im Wesentlichen in horizontaler Richtung. Da die Pfosten 4 im Wesentlichen senkrecht stehend montiert sind, definieren somit jeweils zwei benachbarte Pfosten 4 und zwei benachbarte Riegel 5 ein im Wesentlichen rechteckiges Montagefeld 6. Bei dem in Figur 1 gezeigten Ausführungsbeispiel ist in jedem dieser rechteckigen Montagefelder 6 ein PV-Modul 2 angeordnet und zwar senkrecht stehend. Durch die aufrechte Anordnung der PV-Module 2, die auf beiden Seiten aktive Flächen 9 aufweisen, wird es möglich, aus westlichen und östlichen Richtungen Sonnenlicht effizient einzufangen und mittels der PV-Anlage in elektrischen Strom zu wandeln.

Wie die detaillierte Ansicht der PV-Anlage 1 in Figur 2 zeigt, sind in vertikaler Richtung mehrere PV-Module 2, nämlich genau zwei, übereinander angeordnet. Daneben ist in Figur 2 gut zu erkennen, dass beispielsweise die obersten Riegel 5 in vertikaler Richtung versetzt zueinander angeordnet sind. Da die PV-Module 2 mittels Halteelementen 15 an den Riegeln 5 befestigt sind, kommt es dazu, dass horizontal benachbarte PV-Module 2 ebenfalls in vertikaler Richtung versetzt zueinander angeordnet sind. Diese Ausgestaltung ist erfindungsgemäß bevorzugt, da damit ein einfacher Ausgleich unterschiedlicher Geländeverläufe erreichbar ist.

Wie mit Blick auf Figur 2 gut zu erkennen ist, liegen die jeweils durch C-Profile gebildeten Befestigungsabschnitte 7 und die Halteabschnitte 8 Rücken an Rücken aneinander an und überlappen sich somit in einem Überlappungsbereich. Hierbei ist es erfindungsgemäß bevorzugt, wenn sich der Überlappungsbereich oberhalb des Erdreichs befindet, da dies die Montage des Halteabschnitts 8 an dem Befestigungsabschnitt 7 erleichtert und zudem der Befestigungsabschnitt 7 unabhängig von dem Halteabschnitt 8 im Erdreich verankert werden kann, z.B. durch Einrammen.

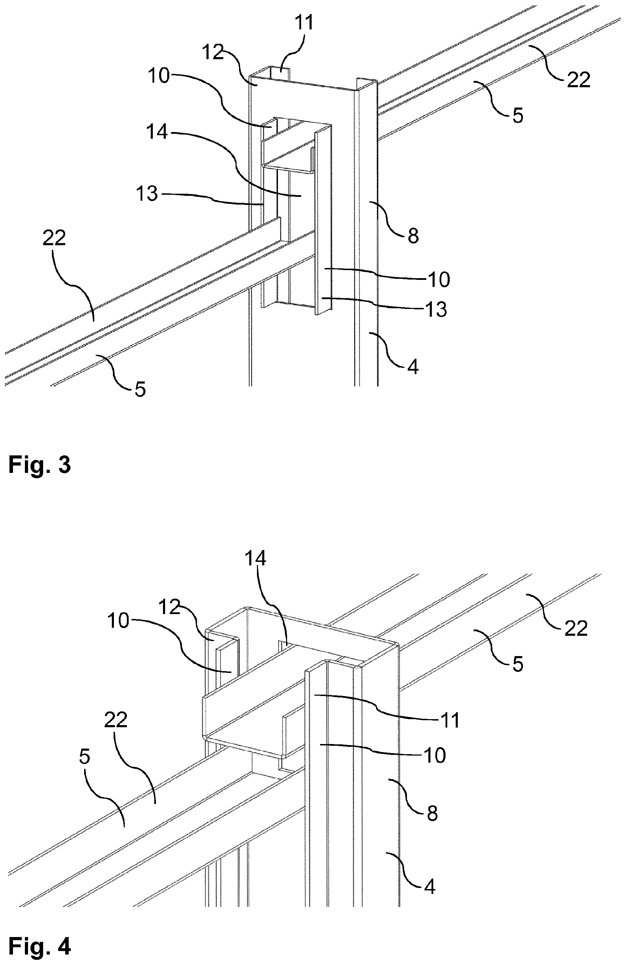

Die Figur 3 zeigt eine erfindungsgemäße Ausgestaltung einer Verbindung eines Pfostens 4, genauer dessen oberen Halteabschnitts 8, mit zwei horizontal verlaufenden Riegeln 5. Während die Riegel 5 jeweils durch ein U-Profil 22 gebildet sind, ist der Halteabschnitt 8 des Pfostens 4 durch ein C-förmiges Profil 12 gebildet.

Zur Befestigung der beiden Riegel 5 ist an dem Pfosten 4 in Figur 3 eine als Durchstecköffnung ausgebildete Öffnung 14 vorgesehen, durch die die Riegel 5 durchgeführt bzw. eingesteckt sind. Die Öffnung 14 selbst ist durch eine Stanzung an dem C-Profil 12 des Pfostens 4 erzeugt worden. Durch einen Stanzvorgang können auf relativ einfache Weise die beiden in Figur 3 dargestellten Laschen 13 erzeugt werden, die gemäß der Erfindung als Halteflächen 10 dienen. Beispielsweise lassen sich die beiden Riegel 5 mittels Schrauben mit selbstschneidendem Gewinde und entsprechend durchgeführten Bohrungen sehr einfach und in variabler Höhe an den beiden Laschen 13 befestigen.

Die Figur 4 zeigt eine hierzu als alternativ vorgesehene Ausbildung von erfindungsgemäßen Halteflächen 10. Hierzu ist der Pfosten 4, genauer sein oberer Halteabschnitt 8, mittels eines Omega-Profils 12 ausgestaltet. An seinen beiden freien Enden weist das Omega-Profil 12 zwei Flansche 11 auf, die, anders als die Laschen 13 in Figur 3, entlang der gesamten Länge des Omega-Profils 12 verlaufen und in vorteilhafter Weise als erfindungsgemäße Halteflächen 10 genutzt werden können. So ist der linke Riegel 5 lediglich in das Omega-Profil 12 eingesteckt, während der rechte Riegel 5 durch eine Durchstecköffnung 14 geführt ist, die in einer Seitenfläche des Pfostens 4 ausgebildet ist. Wie gut zu erkennen ist, können beide Riegel 5 übereinanderliegend an den paarweise ausgebildeten Halteflächen 10 des Omega-Profils 12 befestigt werden. Durch die paarweise Ausgestaltung der Halteflächen 10, jeweils zu beiden Seitenflächen eines Riegels 5, kann eine besonders stabile Verbindung und damit eine besonders stabile Tragkonstruktion 3 erreicht werden. Wie Fig. 4 zeigt, fassen die paarweise ausgestalteten Halteflächen 10 die Riegel 5 jeweils beidseitig.

Sowohl aus Figur 3 als auch aus Figur 4 erschließt sich der Vorteil einer weiteren erfindungsgemäßen Ausgestaltung, welche vorsieht, dass die Riegel 5 schmaler als die Pfosten 4 ausgebildet sind. Denn durch diese Ausgestaltung wird es sehr erleichtert, dass Riegel 5 durch Durchstecköffnungen 14 der Pfosten 4 geführt werden können und gleichzeitig von an den Pfosten 4 ausgebildeten Halteflächen 10 beidseitig, also insbesondere von außen wie in Fig. 4, gefasst sind. Erfindungsgemäß können in einer Durchstecköffnung 14 entweder zwei Riegel platziert sein, wie dies in Figur 3 illustriert ist, oder aber nur ein Riegel, wie das Ausführungsbeispiel der Figur 4 zeigt. Wie Figur 4 zeigt, kann somit ein weiterer, zu einem ersten in einer Durchstecköffnung 14 platzierten Riegel 5 benachbarter Riegel 5 auf einer der Durchstecköffnung 14 gegenüberliegenden Seite des Pfostens 4 montiert sein und zwar ohne Verwendung einer Durchstecköffnung 14, nämlich mittels am Pfosten ausgebildeter Halteflächen 10, die in Figur 4 durch die Flansche 11 gebildet sind. Eine solche Ausgestaltung ist beispielsweise sehr nützlich, um unterschiedliche Höhen in unebenem Gelände auszugleichen.

Beispielsweise das in Figur 3 gezeigte Ausführungsbeispiel kann wahlweise so interpretiert werden, dass der Pfosten 4, zumindest sein Halteabschnitt 8, durch ein Profil 12 mit einer C-förmigen oder U-förmigen Grundform gebildet ist, wobei im Falle der U-Form die freien Enden des Profils 12 als Flansche 11 anzusehen wären. Bevorzugt sind jedoch Flansche 11, die als Halteflächen 10 dienen sollen, erfindungsgemäß wie in Figur 4 ausgebildet, d.h. die Flansche 11 verlaufen bevorzugt in Richtung der Riegel 5. Denn diese Ausgestaltung ermöglicht ein flächiges Anliegen der Riegel 5. Das in Figur 4 gezeigte Omega-Profil 12 des Pfostens 4 wiederum kann auch aufgefasst werden als ein Profil 12 mit einer C-förmigen Grundform, wobei an den Enden dieses Profils 12 die dargestellten Halteflächen 10 als Flansche 11 ausgebildet sind.

Wie bereits in der Figur 2 angedeutet, werden die PV-Module 2 erfindungsgemäß bevorzugt an den Riegeln 5 befestigt, wobei hierzu die in Figur 2 gezeigten Halteelemente 15 vorgesehen sein können.

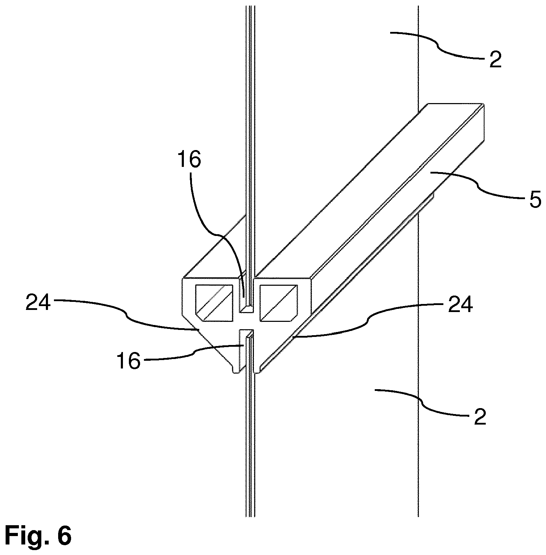

Die Figur 6 zeigt eine hierzu alternative erfindungsgemäße Ausgestaltung, bei der an den Riegeln 5 Nutabschnitte 16 zur Aufnahme und zum Halten der PV-Module 2 vorgesehen sind. Wie in Figur 6 gezeigt, ist es generell erfindungsgemäß bevorzugt, wenn sich Nutabschnitte 16 gegenüberliegen und/oder in einer gemeinsamen Ebene liegen. Denn durch diese Ausgestaltung können die PV-Module 2 mittig in Bezug auf die Tragkonstruktion 3 ausgerichtet werden. Gut zu erkennen in Figur 6 sind auch die erfindungsgemäßen Abschrägungen 24 an der Unterseite des Riegels 5. Diese Abschrägungen 24 minimieren die Abschattung des unteren PV-Moduls 2 durch den Riegel 5.

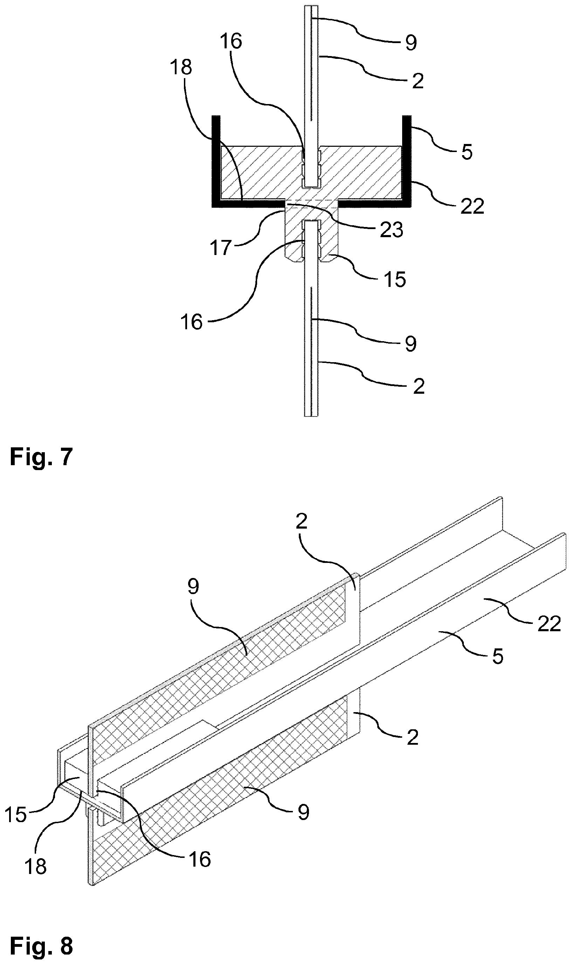

Figur 7 zeigt eine detaillierte Querschnittsansicht durch ein erfindungsgemäßes Halteelement 15. Das Halteelement 15 ist in eine Durchstecköffnung 23 eingesteckt, die an einer Unterseite des Riegels 5 ausgebildet ist, der durch ein U-förmiges Profil 22 gebildet ist. Hierbei ist an dem Halteelement 15 eine Anlagefläche 18 ausgebildet, mit der das Halteelement 15 flächig an der Innenseite des Riegels 5 anliegt. Durch die Querschnittsverjüngung 17, die in Höhe der Anlagefläche 18 ausgebildet ist, wird erreicht, dass das Halteelement 15 bis zu einer definierten Einstecktiefe in die Durchstecköffnung 23 einführbar ist. Damit wird unter anderem erreicht, dass die aktiven Flächen 9 der beiden PV-Module 2 in definiertem Abstand zu dem Riegel 5 montiert werden können, sodass insbesondere Abschattungen effizient vermieden werden können. Wie gut in Fig. 7 zu erkennen ist, sind die PV-Module 2 mit ihren Rändern jeweils in die beiden sich gegenüberliegenden Nutabschnitte 16 des Halteelements 15 eingesteckt. Dabei ist die Einstecktiefe gerade so gewählt, dass die aktiven Flächen 9 der PV-Module 2 durch das Halteelement 15 und/oder den Riegel 5 bis zu einem bestimmten Einfallswinkel nicht abgedeckt oder beschattet werden.

Die soeben erläuterten erfindungsgemäßen Merkmale der Halteelemente 15 sind auch nochmals anschaulich in der perspektivischen Ansicht der Figur 8 illustriert. Insbesondere wird aus Figur 8 ersichtlich, dass die Halteelemente 15 die PV-Module 2 bevorzugt beidseitig fassen, um eine sichere Halterung zu gewährleisten. Hierzu ist es bereits ausreichend, wenn die Halteelemente 15 die PV-Module nur entlang eines bestimmten Randabschnitts beidseitig fassen, wie in Figur 8 dargestellt.

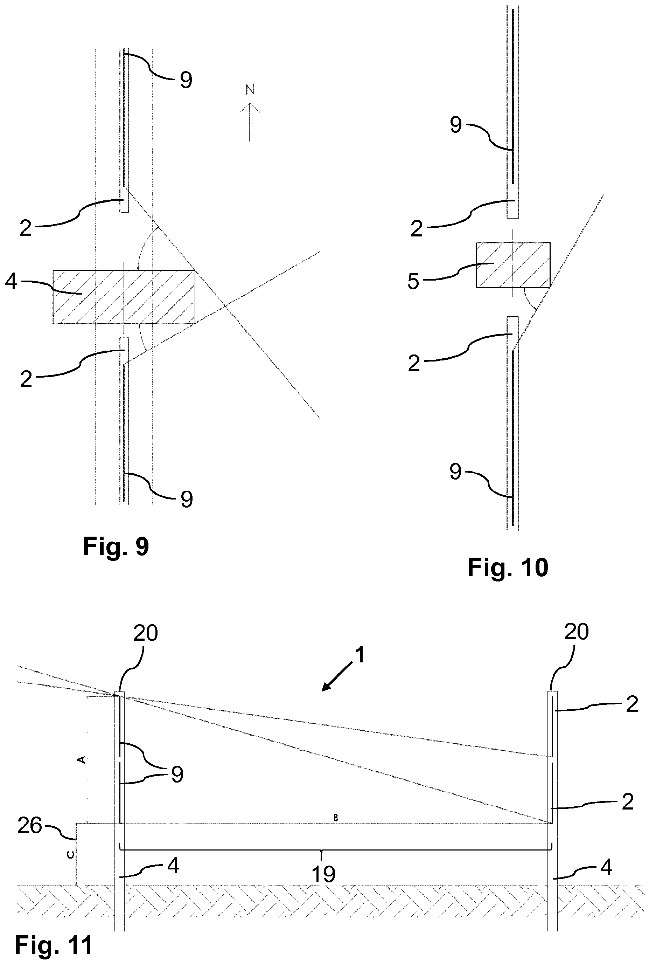

Die Figuren 9 und 10 illustrieren einen weiteren zentralen Aspekt der vorliegenden Erfindung, nämlich die aktiven Flächen 9 der PV-Module 2 von den Pfosten 4 und/oder Riegeln 5 beabstandet anzuordnen. Wie die Draufsicht auf den Pfosten 4 in Figur 9 zeigt, sind die aktiven Flächen 9 der beiden links und rechts des Pfostens 4 angeordneten PV-Module 2 so von dem Pfosten 4 beabstandet, das Sonnenlicht bis zu einem gewissen Einfallswinkel auf die aktive Fläche 9 gelangen kann, ohne dabei von dem Pfosten 4 abgeschattet zu werden. Der Einfallswinkel entspricht in Figur 9 gerade dem Winkel den die beiden dargestellten Sonnenstrahlen jeweils mit dem Lot (horizontal verlaufend in Fig. 9) der betreffenden aktiven Fläche 9 einschließen.

Betrachtet man die beiden sich gegenüberliegenden Seiten der beiden PV-Module 2 genauer, so fällt auf, dass die aktiven Flächen 9 links und rechts des Pfostens nicht denselben Abstand zu dem Pfosten 4 aufweisen. Vielmehr sind sie asymmetrisch beabstandet zu diesem angeordnet. Durch den etwas größeren Abstand der aktiven Fläche 9 des in Figur 9 oben angeordneten PV-Moduls 2 wird erreicht, dass für Sonnenlicht aus südlichen Richtungen eine Abschattung der aktiven Fläche 9 für größere Einfallswinkel ausgeschlossen ist als dies für das in Figur 9 unten angeordnete PV-Modul 2 für Sonnenlicht aus nördlichen Richtungen der Fall ist. Mit anderen Worten wird am südlichen Rand eines PV-Moduls 2 der Abstand zwischen dem PV-Modul 2, genauer seiner aktiven Fläche 9, und dem Pfosten 4 etwas größer gewählt als an seinem nördlichen Rand, wie dies die beiden PV-Module 2 in Figur 9 illustrieren.

Die Figur 10 dagegen zeigt, wie durch eine erfindungsgemäße Beabstandung der aktiven Flächen 9 der beiden dargestellten PV-Module 2 zu dem quer verlaufende Riegel 5 eine Abschattung der aktiven Flächen 9 verhindert werden kann. Da die Figur 10 einen Querschnitt durch einen horizontal verlaufenden Riegel 5 darstellt, fällt der dargestellte Sonnenstrahl von schräg oben sowie in der Regel seitlich auf das untere PV-Modul 2 ein. Durch die Beabstandung der aktiven Fläche 9 des unteren PV-Moduls 2 von dem Riegel 5 wird somit, wie in Fig. 10 dargestellt, ein maximaler Einfallswinkel definiert, bis zu welchem Sonnenlicht abschattungsfrei auf die aktive Fläche 9 auftreffen kann. In der Figur 10 entspräche dieser Einfallswinkel gerade dem Winkel, den der mittels seiner Projektion auf die vertikal verlaufende Schnittebene der Figur 10 dargestellte einfallende Sonnenstrahl mit dem Lot auf die aktive Fläche 9 (waagerecht verlaufend in Figur 10) einschließt. Es versteht sich demnach, dass der tatsächliche Einfallswinkel zwischen Sonnenstrahl und Einfallslot in der Regel größer sein kann, als der Winkel, den die (in Figur 10 illustrierte) Projektion dieses Strahls in der Schnittebene mit dem Einfallslot einschließt.

Für den seltenen Fall, dass bei den in Fig.10 gezeigten PV-Modulen das Einfallslot der aktiven Flächen gerade in Richtung der Sonne zeigte, entspräche der in Fig. 10 durch den Sonnenstrahl illustrierte Einfallswinkel dem Sonnenstand, also der Höhe der Sonne über dem Horizont gemessen in Grad. In der Regel wird das Sonnenlicht jedoch schräg von der Seite auf die PV-Module einstrahlen, sodass Sonnenstand und Einfallswinkel voneinander abweichen. Auch die beiden in Figur 9 dargestellten Sonnenstrahlen fallen schräg von der Seite auf die PV-Module 2 ein, wobei auch hier jeweils Projektionen dieser Strahlen in die horizontal verlaufende Schnittebene der Figur 9 dargestellt sind.

Auch bei dem in Figur 10 dargestellten Ausführungsbeispiel könnte erfindungsgemäß eine asymmetrische Beabstandung der PV-Module von dem Riegel 5 vorgesehen sein. Beispielsweise wäre es gemäß der Erfindung vorteilhaft, das obere PV-Modul 2, genauer dessen aktive Fläche 9, näher an den Riegel 5 heranzurücken. Damit würde einerseits die maximale Bauhöhe der Tragkonstruktion 3 und damit die wirkende Windlast reduziert; andererseits kann eine Abschattung der oberen aktiven Fläche 9 durch den darunterliegenden Riegel 5 ausgeschlossen werden, da das Sonnenlicht stets von schräg oben auf die PV-Module 2 einfällt. Gemäß der Erfindung könnte das obere PV-Modul 2 also nahe an den Riegel 5 heranrücken, bis die aktive Fläche 9 gerade noch nicht durch den Riegel 5 abgedeckt ist.

Die Figur 11 schließlich erläutert weitere erfindungsgemäße Ausgestaltungen der Photovoltaik-Anlage 1, insbesondere die erfindungsgemäße Beabstandung der Reihen 20 der PV-Anlage 1. Wie bereits in den Figuren 1 und 2 illustriert, können die PV-Module 2 erfindungsgemäß mit der Tragkonstruktion 3 im Wesentlichen eine Ebene bilden. Zur effizienten Flächenausnutzung werden erfindungsgemäß die PV-Module 2, wie in Figur 11 gezeigt, in voneinander beabstandeten Reihen 20 angeordnet. Auch die PV-Module 2 einer Reihe 20 bilden somit im Wesentlichen eine Ebene, wobei diese Ebene insbesondere in Nord-Südrichtung ausgerichtet sein kann, wie dies in Fig. 11 der Fall ist. Somit kann bei einem beispielsweise aus westlicher Richtung einfallenden Sonnenstrahl (von links kommend in Figur 11) die in Figur 11 gezeigte Situation auftreten, dass also ein Teilbereich einer Reihe 20 (hier die unteren PV-Module der rechten Reihe 20) durch eine benachbarte Reihe 20 (hier die linke Reihe 20) abgeschattet ist.

Wie durch die beiden Sonnenstrahlen in Figur 11 angedeutet, nimmt dabei die Abschattung zu, je niedriger der Sonnenstand ist. Daher ist eine wie in Figur 11 gezeigte Ausgestaltung bevorzugt, bei der der mit B bezeichnete Abstand zwischen den beiden Reihen 20 mehr als das Dreifache der maximalen Höhe einer aktiven Fläche 9 der PV-Anlage 1 beträgt. Diese maximale Höhe entspricht in Figur 11 gerade dem vertikalen Abstand A, der den Abstand zwischen einem höchstgelegenen und einem niedrigstgelegenen Punkt, jeweils innerhalb der aktiven Flächen 9 der linken Reihe 20, definiert. Durch den erfindungsgemäß groß gewählten horizontalen Abstand B zwischen den beiden Reihen 20 wird somit, wie der obere Sonnenstrahl in Figur 11 zeigt, gewährleistet, dass auch bei einem niedrigen Sonnenstand nur ein Teilbereich der rechten Reihe 20 abgeschattet wird, sodass zumindest die oberen aktiven Flächen 9 der rechten Reihe 20 in Figur 11 weiterhin zur Stromproduktion genutzt werden können.

Ein weiterer Vorteil der Beabstandung der Reihen 20 der PV-Anlage 1 besteht in dem Bewirtschaftungsfreiraum 19, der zwischen den Reihen entsteht, denn dieser lässt sich beispielsweise landwirtschaftlich nutzen. Die Erfindung sieht hierzu insbesondere vor, den in Figur 11 mit einer Breite B bezeichneten Bewirtschaftungsfreiraum 19 nutzbar zu machen, indem jeweils in jeder Reihe zwischen den Pfosten 4 und zwischen dem untersten Riegel 5 der Tragkonstruktion 3 und der Erdoberfläche ein Freiraum 26 freigehalten ist. Dadurch, dass die PV-Module 2 somit mindestens in einer Höhe C über dem Erdboden angeordnet sind (vgl. Fig. 11), kann zum einen eine Beschädigung derselben durch Steinschlag bei einer landwirtschaftlichen Nutzung des Bewirtschaftungsfreiraums 19 vermieden werden. Zum anderen werden durch diese Ausgestaltung insbesondere die unteren aktiven Flächen 9 der PV-Anlage einer Abschattung durch Bewuchs oder Anpflanzungen im Bewirtschaftungsfreiraum 19 weitgehend entzogen. Der Freiraum 26 schafft somit die notwendigen Voraussetzungen zur landwirtschaftlichen Nutzung des Bewirtschaftungsfreiraums 19 ohne nennenswerte Einbußen bei der Stromproduktion.

Anhand der Figur 11 lassen sich auch die Vorteile einer erfindungsgemäßen Aufteilung der PV-Anlage in übereinander angeordnete elektrische Zeilen 21 verstehen. Denn dadurch, dass die untere Zeile 21 der rechten Reihe 20 in Figur 11 elektrisch von der oberen Zeile 21 der rechten Reihe 20 in Figur 11 getrennt ist, d.h. insbesondere jeweils einem separaten Wechselrichtereingang zugeordnet ist, kann sich die Abschattung der unteren Zeile 21 nicht auf den von der oberen Zeile 21 produzierten Strom auswirken. In analoger Weise könnte in Figur 11 der Effekt einer Teilabschattung des oberen PV-Moduls 2 der rechten Reihe 20 erfindungsgemäß dadurch minimiert werden, dass dieses PV-Modul 2 zwei horizontal verlaufende und übereinander angeordnete elektrische Zeilen aufweist, gebildet beispielsweise durch zwei elektrisch voneinander getrennte aktive Flächen 9 innerhalb des PV-Moduls 2.

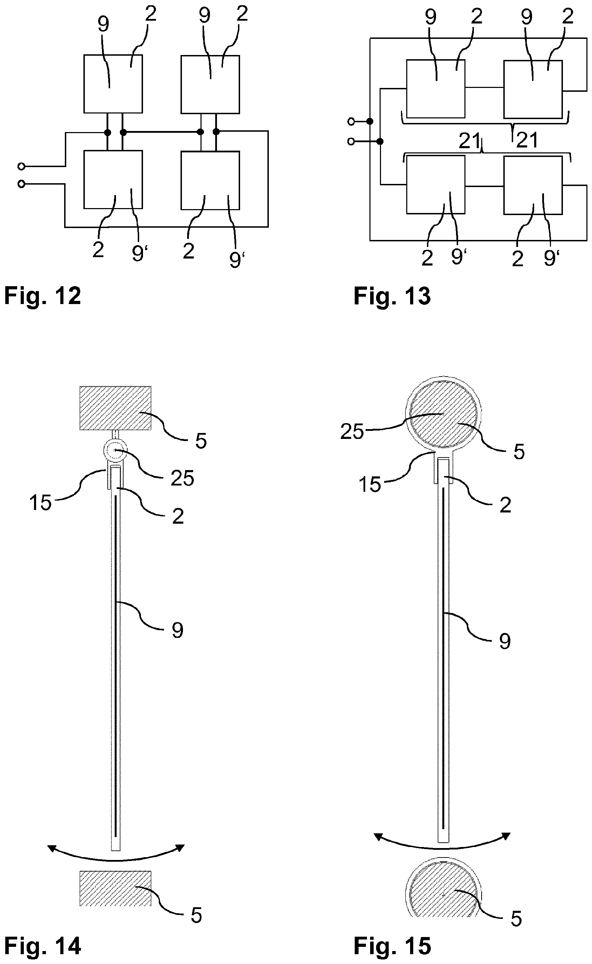

Die Figuren 12 und 13 zeigen erfindungsgemäße elektrische Verschaltungen von oberen und unteren aktiven Flächen 9 einer PV-Anlage 1, die jeweils in der oberen beziehungsweise unteren Hälfte der Zeichnung dargestellt sind. Die in den Figuren 12 und 13 gezeigten aktiven Flächen 9, 9' gehören dabei jeweils zu einem separaten PV-Modul 2. Jedoch lässt sich die im Folgenden erläuterte Verschaltung von aktiven Flächen 9, 9' analog auch auf PV-Module 2 anwenden, die mehrere elektrisch voneinander getrennte aktive Flächen 9, 9' aufweisen, insbesondere dann wenn diese nicht nebeneinander sondern übereinander in der PV-Anlage angeordnet werden.

Bei der in Figur 12 gezeigten Verschaltung ist jeweils eine obere aktive Fläche 9 zu einer direkt darunter angeordneten unteren aktiven Fläche 9' parallel geschalten, sodass der Stromfluss beispielsweise durch die obere linke aktive Fläche 9 verschieden sein kann von dem Stromfluss durch die untere linke aktive Fläche 9'. Damit kann die untere aktive Fläche 9', die sich in einer Höhe befindet, die von der darüber liegenden oberen aktiven Fläche 9 verschieden ist, in einem anderen elektrischen Arbeitspunkt betrieben werden, als die obere aktive Fläche 9.

Zu dieser Parallelschaltung ist eine weitere gleichartige Parallelschaltung in Serie geschaltet, die durch die beiden rechten aktiven Flächen 9 und 9' gebildet ist. Aufgrund der zweifachen Parallelschaltung können die Ströme in jeder einzelnen der dargestellten aktiven Flächen 9,9' variieren.

Bei der in Figur 13 gezeigten Verschaltung sind die beiden oberen aktiven Flächen 9 durch seriell miteinander verbunden. Diese beiden aktiven Flächen 9 bilden somit eine obere elektrische Zeile 21 im Sinne der Erfindung. In gleicher Weise sind die beiden unteren aktiven Flächen 9' seriell miteinander zu einer unteren elektrischen Zeile 21 verbunden. Die obere und die untere elektrische Zeile 21 sind parallel geschalten und können somit beispielsweise einem gemeinsamen Wechselrichtereingang zugeführt werden.

Alternativ könnte auch jede der beiden elektrischen Zeilen 21 der Verschaltung der Figur 13 einem separaten Wechselrichtereingang zugeordnet sein. In diesem Fall wären somit die beiden elektrischen Zeilen 21 voneinander elektrisch getrennt.

Während in Figur 13 durch die beiden oberen aktiven Flächen 9 der gleiche Strom fließt, kann sich der Stromfluss durch die obere elektrische Zeile 21 von dem Stromfluss durch die untere elektrische Zeile 21 unterscheiden. Mit anderen Worten können die unteren aktiven Flächen 9' in einem Arbeitspunkt betrieben werden, der von demjenigen abweicht, in dem die beiden oberen aktiven Flächen 9 arbeiten, wie dies auch bei der in Figur 12 dargestellten Verschaltung der Fall ist.

Die Figuren 14 und 15 schließlich zeigen jeweils eine Querschnittsansicht durch einen oberen und einen unteren Riegel 5, jeweils dargestellt durch die schraffierten Flächen, einer erfindungsgemäßen Tragkonstruktion 3. Hierbei sind die bifazialen PV-Module 2 so an der Tragkonstruktion 3 aufgehängt, dass sie um eine Drehachse 25 schwenken können, wie durch die Doppelpfeile angedeutet, sobald eine erhebliche Windlast auf die PV-Module 2 wirkt. Die Drehachse 25 verläuft dabei bevorzugt annähernd parallel zu den Riegeln 5. Gemäß der Erfindung kann es dabei vorteilhaft sein, wenn die Schwenkbewegung der PV-Module 2 durch eine zusätzliche Vorrichtung gedämpft wird.

Bei dem in Fig.14 gezeigten Ausführungsbeispiel ist hierzu unterhalb des oberen rechteckigen Riegels 5 ein Halteelement 15 vorgesehen, das das PV-Modul 2 beidseitig umfasst und seinerseits um die Drehachse 25 drehbar an dem oberen Riegel 5 befestigt ist.

Bei dem in Fig.15 gezeigten Ausführungsbeispiel sind die Riegel 5 hingegen mit einer runden Außenkontur ausgestaltet, sodass das Halteelement 15, welches das PV-Modul 2 hält, den Riegel 5 ringförmig umgreifen kann und somit gemeinsam mit dem PV-Modul 2 um die Drehachse 25, gebildet durch die Mittelachse des oberen Riegels 5, schwenken kann.

Zusammenfassend wird zur wirtschaftlichen und energieeffizienten Nutzung einer PV-Anlage 1 mit aufrecht stehenden, insbesondere bifazialen, PV-Modulen 2 und insbesondere zur weitgehenden Vermeidung von Abschattungen der PV-Module 2 einerseits eine sehr einfach zu fertigende und zu montierende Tragkonstruktion 3 vorgeschlagen, die durch an Kreuzungspunkten miteinander verbundene vertikale Pfosten 4 und horizontal verlaufende Riegel 5 aufgebaut ist, sodass rechtwinklige Montagefelder 6 für die einzelnen PV-Module 2 bereitgestellt werden können, wobei die Pfosten 4 und Riegel 5 vorzugsweise jeweils in materialsparender Weise durch gängige Profile 12, 22 gebildet sein können und wobei insbesondere eine Aufteilung der Pfosten 4 in zwei miteinander verbindbare Abschnitte 7,8 die Montage insgesamt wesentlich erleichtert; zum anderen schlägt die Erfindung eine elektrische Verschaltung vor, sodass übereinander angeordnete aktive Flächen 9, 9' in unterschiedlichen elektrischen Arbeitspunkten betrieben werden können, und sodass bevorzugt voneinander getrennt betriebene elektrischen Zeilen 21 gebildet sind, die vorzugsweise horizontal verlaufend angeordnet sind. Damit können die Auswirkungen von Abschattungen von PV-Modulen 2 auf die Effizienz der Energiewandlung der PV-Anlage 1 weiter minimiert werden.

### Bezugszeichenliste

- 1: Photovoltaik-Anlage
- 2: PV-Modul
- 3: Tragkonstruktion
- 4: Pfosten
- 5: Riegel
- 6: Montagefeld
- 7: Befestigungsabschnitt
- 8: Halteabschnitt
- 9: (obere) aktive Fläche
- 9': (untere) aktive Fläche
- 10: Halteflächen
- 11: Flansch
- 12: Profil von 4
- 13: Lasche
- 14: Öffnung, insbesondere Durchstecköffnung, von 4 (für 5)
- 15: Halteelemente
- 16: Nutabschnitt
- 17: Querschnittsverjüngung
- 18: Anlagefläche
- 19: Bewirtschaftungsfreiraum
- 20: Reihe
- 21: elektrische Zeile
- 22: Profil von 5
- 23: Öffnung, insbesondere Durchstecköffnung, von 5 (für 15)
- 24: Abschrägung
- 25: Drehachse
- 26: Freiraum

## Patentansprüche

1. Photovoltaik(PV)-Anlage (1) mit mehreren bifazialen PV-Modulen (2), die aufrecht stehend an einer Tragkonstruktion (3) angeordnet sind, wobei die Tragkonstruktion (3) mehrere Pfosten (4) aufweist, die an oder im Erdreich befestigt, insbesondere verankert, sind, wobei an den Pfosten (4) Riegel (5) befestigt sind, die jeweils zwei benachbarte Pfosten (4) miteinander verbinden und wobei jeweils zwei Pfosten (4) und zwei Riegel (5) ein im Wesentlichen rechteckiges Montagefeld (6) definieren, in dem wenigstens ein PV-Modul (2) angeordnet ist, **dadurch gekennzeichnet, dass** an den Pfosten (4) Durchstecköffnungen (14) ausgebildet sind, um jeweils einen Riegel (5) oder dessen Ende aufzunehmen.

2. Photovoltaik-Anlage (1) nach Anspruch 1, **dadurch gekennzeichnet, dass** die Pfosten (4) im Wesentlichen vertikal und/oder die Riegel (5) im Wesentlichen horizontal ausgerichtet sind und/oder dass in vertikaler Richtung mehrere, insbesondere bis zu vier, PV-Module (2) übereinander angeordnet sind.

3. Photovoltaik-Anlage (1) nach Anspruch 1 oder 2, **dadurch gekennzeichnet, dass** die Pfosten (4) zumindest in einen mit dem Erdreich verbundenen Befestigungsabschnitt (7) und einen damit verbindbaren oder verbundenen Halteabschnitt (8), der sich oberhalb des Befestigungsabschnitts (7) erstreckt, unterteilt sind und/oder dass horizontal benachbarte PV-Module (2) in vertikaler Richtung versetzt zueinander angeordnet sind.

4. Photovoltaik-Anlage (1) nach einem der vorhergehenden Ansprüche, **dadurch gekennzeichnet, dass** aktive Flächen (9) der PV-Module (2) von den Pfosten (4) und/oder Riegeln (5) beabstandet angeordnet sind, insbesondere derart, dass zumindest bis zu einem Einfallswinkel von 20°, besonders bevorzugt zumindest bis zu einem Einfallswinkel von 30°, eine Abschattung der aktiven Fläche (9) durch Pfosten (4) ausgeschlossen ist und/oder dass zumindest bis zu einem Einfallswinkel von 25°, vorzugsweise zumindest bis zu einem Einfallswinkel von 30° oder sogar 40°, eine Abschattung der aktiven Fläche (9) durch Riegel (5) ausgeschlossen ist.

5. Photovoltaik-Anlage (1) nach einem der vorhergehenden Ansprüche, **dadurch gekennzeichnet, dass** die aktiven Flächen (9) der PV-Module (2) an einander gegenüberliegenden Seiten asymmetrisch beabstandet zu Pfosten (4) und/oder Riegeln (5) angeordnet sind und/oder dass die PV-Module (2) um eine, vorzugsweise in etwa parallel zu den Riegeln (5) verlaufende, Drehachse (25) schwenkbar an der Tragkonstruktion (3) aufgehängt sind.

6. Photovoltaik-Anlage (1) nach einem der vorhergehenden Ansprüche, **dadurch gekennzeichnet, dass** an den Pfosten (4) Halteflächen (10) ausgebildet sind, an denen ein zugehöriger Riegel (5) flächig befestigbar ist, insbesondere wobei die Halteflächen (10) als Flansche (11) an einem Profil (12) und/oder als Laschen (13) an einer Öffnung (14) in einem Profil (12) ausgebildet sind.

7. Photovoltaik-Anlage (1) nach Anspruch 6, **dadurch gekennzeichnet, dass** die Halteflächen (10) paarweise ausgebildet sind, um einen zwischen den Halteflächen (10) eingeschobenen Riegel (5) beidseitig zu fassen, und/oder dass die Riegel (5) schmaler als die Pfosten (4), insbesondere schmaler als ein Abstand zwischen paarweise ausgebildeten Halteflächen (10), ausgebildet sind.

8. Photovoltaik-Anlage (1) nach einem der vorhergehenden Ansprüche, **dadurch gekennzeichnet, dass** zumindest ein oder der Halteabschnitt (8) der Pfosten (4) in Form eines Omega-Profils ausgebildet ist.

9. Photovoltaik-Anlage (1) nach Anspruch 8, **dadurch gekennzeichnet, dass** in einer Durchstecköffnung (14) zwei Riegel (5) platziert sind oder dass in einer Durchstecköffnung (14) nur ein Riegel (5) platziert ist, während ein weiterer Riegel (5) auf einer der Durchstecköffnung (14) gegenüberliegenden Seite des Pfostens (4) ohne Durchstecköffnung (14) und mittels am Pfosten (4) ausgebildeter Halteflächen (10) montiert ist, insbesondere wobei an einer Haltefläche (10) ein durch eine Durchstecköffnung (14) gesteckter Riegel (5) und ein weiterer Riegel (5) befestigt sind.

10. Photovoltaik-Anlage (1) nach einem der vorhergehenden Ansprüche, **dadurch gekennzeichnet, dass** die Pfosten (4) zumindest in dem oder einem Halteabschnitt (8) ein Profil (12) mit einer C-förmigen, U-förmigen, Z-förmigen oder S-förmigen Grundform aufweisen, insbesondere wobei an den Enden des Profils (12) zusätzliche Halteflächen (10) als Flansche (11) ausgebildet sind.

11. Photovoltaik-Anlage (1) nach einem der vorhergehenden Ansprüche, **dadurch gekennzeichnet, dass** die PV-Module (2) an den Riegeln (5) befestigt sind, wobei hierzu Halteelemente (15) vorgesehen sind, vorzugsweise wobei die Halteelemente (15) hierzu Nutabschnitte (16) bereitstellen, in die ein Rand des jeweiligen PV-Moduls (2) eingesteckt oder einsteckbar ist, besonders bevorzugt wobei ein Halteelement (15) zwei gegenüberliegende Nutabschnitte (16) aufweist und/oder dass die Riegel (5) an einer Unterseite eine Abschrägung (24) aufweisen.

12. Photovoltaik-Anlage (1) nach Anspruch 11, **dadurch gekennzeichnet, dass** die Halteelemente (15) jeweils eine Querschnittsverjüngung (17) aufweisen, sodass ein Halteelement (15) in eine an einem Riegel ausgebildete Durchstecköffnung (14) bis zu einer definierten Einstecktiefe einsteckbar oder eingesteckt ist, insbesondere wobei an dem Halteelement (15) eine Anlagefläche (18) ausgebildet ist mit der das Halteelement (15) flächig an dem Riegel (5) anliegt.

13. Photovoltaik-Anlage (1) nach einem der vorhergehenden Ansprüche, **dadurch gekennzeichnet, dass** zwischen dem Erdreich und einem untersten Riegel (5) ein Freiraum (26) freigehalten ist, insbesondere wobei der Freiraum (26) eine Höhe von wenigstens 50 cm, wenigstens 60 cm oder wenigstens 1 m aufweist, insbesondere wobei Reihen (20) der PV-Anlage (1) derart beabstandet angeordnet sind, dass zwischen den Reihen (20) ein Bewirtschaftungsfreiraum mit einer Breite von wenigstens 6 Metern, wenigstens 8 Metern oder wenigstens 10 Metern besteht.

14. Photovoltaik-Anlage (1) nach einem der vorhergehenden Ansprüche, **dadurch gekennzeichnet, dass** die PV-Module (2) mit der Tragkonstruktion (3) im Wesentlichen eine Ebene bilden und/oder dass die PV-Module (2) in mehreren voneinander beabstandeten Reihen (20) angeordnet sind, wobei die PV-Module (2) einer Reihe (20) im Wesentlichen eine Ebene bilden.

15. Photovoltaik-Anlage (1) nach Anspruch 14, **dadurch gekennzeichnet, dass** ein Abstand zwischen zwei Reihen (20) wenigstens das Dreifache, bevorzugt wenigstens das Vierfache, besonders bevorzugt wenigstens das Fünffache einer maximalen Höhe einer aktiven Fläche (9) der PV-Anlage (1) beträgt.

## Claims

1. Photovoltaic(PV) system (1) having a plurality of bifacial PV modules (2) which are arranged upright on a supporting structure (3), wherein the supporting structure (3) has a plurality of posts (4) which are secured, in particular anchored, on or in the ground, wherein crossmembers (5) are secured to the posts (4), said crossmembers in each case connecting two adjacent posts (4) to each other, and wherein in each case two posts (4) and two crossmembers (5) define a substantially rectangular mounting area (6) in which at least one PV module (2) is arranged, **characterized in that** plug-through openings (14) are formed on the posts (4) in order in each case to receive a crossmember (5) or the end thereof.

2. Photovoltaic system (1) according to Claim 1, **characterized in that** the posts (4) are oriented substantially vertically and/or the crossmembers (5) are oriented substantially horizontally, and/or **in that** a plurality of PV modules (2), in particular up to four PV modules (2), are arranged one above another in the vertical direction.

3. Photovoltaic system (1) according to Claim 1 or 2, **characterized in that** the posts (4) are divided at least into a securing section (7) which is connected to the ground and a holding section (8) which is connectable or is connected thereto and extends above the securing section (7), and/or **in that** horizontally adjacent PV modules (2) are arranged offset with respect to one another in the vertical direction.

4. Photovoltaic system (1) according to one of the preceding claims, **characterized in that** active surfaces (9) of the PV modules (2) are arranged at a distance from the posts (4) and/or crossmembers (5), in particular in such a manner that, at least up to an angle of incidence of 20°, particularly preferably at least up to an angle of incidence of 30°, shading of the active surface (9) by means of posts (4) is prevented, and/or, at least up to an angle of incidence of 25°, preferably at least up to an angle of incidence of 30° or even 40°, shading of the active surface (9) by means of crossmembers (5) is prevented.

5. Photovoltaic system (1) according to one of the preceding claims, **characterized in that** the active surfaces (9) of the PV modules (2) on mutually opposite sides are arranged asymmetrically at a distance from posts (4) and/or crossmembers (5), and/or **in that** the PV modules (2) are suspended on the supporting structure (3) so as to be pivotable about an axis of rotation (25), which preferably runs approximately parallel to the crossmembers (5).

6. Photovoltaic system (1) according to one of the preceding claims, **characterized in that** holding surfaces (10) are formed on the posts (4), to which holding surfaces an associated crossmember (5) can be flatly secured, in particular wherein the holding surfaces (10) are designed as flanges (11) on a profile (12) and/or as tabs (13) on an opening (14) in a profile (12).

7. Photovoltaic system (1) according to Claim 6, **characterized in that** the holding surfaces (10) are formed in pairs in order to grip a crossmember (5), which has been pushed between the holding surfaces (10), on both sides, and/or **in that** the crossmembers (5) are designed to be narrower than the posts (4), in particular narrower than a distance between holding surfaces (10) formed in pairs.

8. Photovoltaic system (1) according to one of the preceding claims, **characterized in that** at least one of the posts (4) or the holding section (8) of the posts (4) is designed in the form of an omega profile.

9. Photovoltaic system (1) according to Claim 8, **characterized in that** two crossmembers (5) are placed in a plug-through opening (14), or **in that** only one crossmember (5) is placed in a plug-through opening (14) while a further crossmember (5) is mounted on a side of the post (4) which lies opposite the plug-through opening (14) and does not have a plug-through opening (14) and by means of holding surfaces (10) formed on the post (4), in particular wherein a crossmember (5) plugged through a plug-through opening (14) and a further crossmember (5) are secured on a holding surface (10).

10. Photovoltaic system (1) according to one of the preceding claims, **characterized in that** the posts (4) have a profile (12) with a C-shaped, U-shaped, Z-shaped or S-shaped basic shape, at least in the or a holding section (8), in particular wherein additional holding surfaces (10) are designed as flanges (11) at the ends of the profile (12).

11. Photovoltaic system (1) according to one of the preceding claims, **characterized in that** the PV modules (2) are secured to the crossmembers (5), wherein, for this purpose, holding elements (15) are provided, preferably wherein the holding elements (15) for this purpose provide groove sections (16) into which a border of the respective PV module (2) is plugged or is pluggable, particularly preferably wherein a holding element (15) has two opposite groove sections (16), and/or **in that** the crossmembers (5) have a bevel (24) on a lower side.

12. Photovoltaic system (1) according to Claim 11, **characterized in that** the holding elements (15) each have a cross-sectional tapered portion (17) such that a holding element (15) is pluggable or plugged into a plug-through opening (14), which is formed on a crossmember, as far as a defined plug-in depth, in particular wherein a contact surface (18) is formed on the holding element (15), by which contact surface the holding element (15) lies flatly against the crossmember (5).

13. Photovoltaic system (1) according to one of the preceding claims, **characterized in that** an open space (26) is kept free between the ground and a lowermost crossmember (5), in particular wherein the open space (26) has a height of at least 50 cm, at least 60 cm, or at least 1 m, in particular wherein rows (20) of the PV system (1) are arranged at a distance in such a manner that there is an open cultivation space having a width of at least 6 metres, at least 8 metres or at least 10 metres between the rows (20).

14. Photovoltaic system (1) according to one of the preceding claims, **characterized in that** the PV modules (2) substantially form a plane with the supporting structure (3), and/or **in that** the PV modules (2) are arranged in a plurality of spaced-apart rows (20), wherein the PV modules (2) of one row (20) substantially form a plane.

15. Photovoltaic system (1) according to Claim 14, **characterized in that** a distance between two rows (20) is at least three times, preferably at least four times, particularly preferably at least five times a maximum height of an active surface (9) of the PV system (1).

## Revendications

1. Installation photovoltaïque (PV) (1) comprenant plusieurs modules PV à double face (2), qui sont disposés en position dressée sur une structure de support (3), dans laquelle la structure de support (3) présente plusieurs piliers (4), qui sont fixés, en particulier ancrés, sur ou dans le sol, dans laquelle des verrous (5) sont fixés aux piliers (4), qui relient l'un à l'autre chaque fois deux piliers voisins (4) et dans laquelle chaque fois deux piliers (4) et deux verrous (5) définissent un champ de montage essentiellement rectangulaire (6), dans lequel au moins un module PV (2) est disposé, **caractérisée en ce que** des ouvertures de traversée (14) sont réalisées sur les piliers (4) afin de contenir respectivement un verrou (5) ou l'extrémité de celui-ci.

2. Installation photovoltaïque (1) selon la revendication 1, **caractérisée en ce que** les piliers (4) sont orientés essentiellement verticalement et/ou les verrous (5) sont orientés essentiellement horizontalement et/ou **en ce que** plusieurs, en particulier jusque quatre, modules PV (2) sont disposés l'un au-dessus de l'autre en direction verticale.

3. Installation photovoltaïque (1) selon la revendication 1 ou 2, **caractérisée en ce que** les piliers (4) sont divisés au moins en une partie de fixation (7) liée au sol et une partie de maintien (8) pouvant être ou étant assemblée à celle-ci, qui s'étend au-dessus de la partie de fixation (7), et/ou **en ce que** des modules PV (2) voisins en direction horizontale sont disposés de façon décalée l'un par rapport à l'autre en direction verticale.

4. Installation photovoltaïque (1) selon l'une quelconque des revendications précédentes, **caractérisée en ce que** des faces actives (9) des modules PV (2) sont disposées à distance des piliers (4) et/ou des verrous (5), en particulier de telle manière que, au moins jusqu'à un angle d'incidence de 20°, de préférence encore au moins jusqu'à un angle d'incidence de 30°, la formation d'une ombre par des piliers (4) sur les faces actives (9) soit exclue et/ou **en ce que**, au moins jusqu'à un angle d'incidence de 25°, de préférence encore au moins jusqu'à un angle d'incidence de 30° voire même de 40°, la formation d'une ombre par des verrous (5) sur les faces actives (9) soit exclue.

5. Installation photovoltaïque (1) selon l'une quelconque des revendications précédentes, **caractérisée en ce que** les faces actives (9) des modules PV (2) sont disposées sur des côtés opposés l'un à l'autre de façon asymétrique à distance de piliers (4) et/ou de verrous (5), et/ou **en ce que** les modules PV (2) sont suspendus à la structure de support (3) de façon pivotante autour d'un axe de rotation (25) qui s'étend de préférence approximativement parallèlement aux verrous (5).

6. Installation photovoltaïque (1) selon l'une quelconque des revendications précédentes, **caractérisée en ce que** des faces de maintien (10) sont formées sur les piliers (4), sur lesquelles un verrou correspondant (5) peut être fixé à plat, en particulier dans laquelle les faces de maintien (10) sont réalisées sous la forme d'ailes (11) sur un profilé (12) et/ou sous la forme de pattes (13) au niveau d'une ouverture (14) dans un profilé (12).

7. Installation photovoltaïque (1) selon la revendication 6, **caractérisée en ce que** les faces de maintien (10) sont réalisées par paires, afin de serrer sur les deux côtés un verrou (5) inséré entre les faces de maintien (10), et/ou **en ce que** les verrous (5) sont réalisés de façon plus étroite que les piliers (4), en particulier de façon plus étroite qu'une distance entre des faces de maintien (10) réalisées par paires.

8. Installation photovoltaïque (1) selon l'une quelconque des revendications précédentes, **caractérisée en ce qu'**au moins une ou la partie de maintien (8) des piliers (4) est réalisée en forme de profilé oméga.

9. Installation photovoltaïque (1) selon la revendication 8, **caractérisée en ce que** deux verrous (5) sont placés dans une ouverture de traversée (14) ou **en ce qu'**un verrou (5) seulement est placé dans une ouverture de traversée (14), tandis qu'un autre verrou (5) est monté sur un côté opposé à l'ouverture de traversée (14) du pilier (4) sans ouverture de traversée (14) et au moyen de faces de maintien (10) formées sur le pilier (4), en particulier dans laquelle un verrou (5) engagé à travers une ouverture de traversée (14) et un autre verrou (5) sont fixés à une face de maintien (10).

10. Installation photovoltaïque (1) selon l'une quelconque des revendications précédentes, **caractérisée en ce que** les piliers (4) présentent, au moins dans la ou dans une partie de maintien (8), un profilé (12) qui présente une forme de base en forme de C, en forme de U, en forme de Z ou en forme de S, en particulier dans laquelle des faces de maintien additionnelles (10) sont réalisées sous forme d'ailes (11) aux extrémités du profilé (12).

11. Installation photovoltaïque (1) selon l'une quelconque des revendications précédentes, **caractérisée en ce que** les modules PV (2) sont fixés aux verrous (5), dans laquelle il est prévu à cet effet des éléments de maintien (15), de préférence dans laquelle les éléments de maintien (15) comportent à cet effet des parties de rainure (16), dans lesquelles un bord du module PV respectif (2) est ou peut être engagé, de préférence encore dans laquelle un élément de maintien (15) présente deux parties de rainure opposées (16) et/ou **en ce que** les verrous (5) présentent un chanfrein (24) sur un côté inférieur.

12. Installation photovoltaïque (1) selon l'une quelconque des revendications précédentes, **caractérisée en ce que** les éléments de maintien (15) présentent chaque fois un rétrécissement de section transversale (17), de telle manière qu'un élément de maintien (15) puisse être ou soit engagé dans une ouverture de traversée (14) formée sur un verrou jusqu'à une profondeur d'engagement définie, en particulier dans laquelle une face d'appui (18) est formée sur l'élément de maintien (15) par l'intermédiaire de laquelle l'élément de maintien (15) est appliqué à plat sur le verrou (5).

13. Installation photovoltaïque (1) selon l'une quelconque des revendications précédentes, **caractérisée en ce qu'**un espace libre (26) est gardé libre entre le sol et un verrou le plus inférieur (5), en particulier dans laquelle l'espace libre présente une hauteur d'au moins 50 cm, d'au moins 60 cm ou d'au moins 1 m, en particulier dans laquelle des rangées (20) de l'installation PV (1) sont disposées à distance de telle manière qu'il existe entre les rangées (20) un espace libre d'exploitation qui présente une largeur d'au moins 6 mètres, d'au moins 8 mètres ou d'au moins 10 mètres.

14. Installation photovoltaïque (1) selon l'une quelconque des revendications précédentes, **caractérisée en ce que** les modules PV (2) forment avec la structure de support essentiellement un plan et/ou **en ce que** les modules PV (2) sont disposés en plusieurs rangées (20) espacées l'une de l'autre, dans laquelle les modules PV (2) d'une rangée (20) forment essentiellement un plan.

15. Installation photovoltaïque (1) selon la revendication 14, **caractérisée en ce qu'**une distance entre deux rangées (20) est égale au moins au triple, de préférence au moins au quadruple, de préférence encore au moins au quintuple d'une hauteur maximale d'une face active (9) de l'installation PV (1).
